# EUROPÄISCHE PATENTSCHRIFT

(11) **EP 4 200 944 B1**
(45) Veröffentlichungstag und Bekanntmachung des Hinweises auf die Patenterteilung: **06.05.2026**
(21) Anmeldenummer: 21758694.0
(22) Anmeldetag: 11.08.2021
(51) Int. Cl.: H01R 24/30, H01R 103/00, H01R 13/66

(54) **ELEKTRISCHER STECKVERBINDER**
ELECTRICAL PLUG CONNECTOR
CONNECTEUR ÉLECTRIQUE

(30) Priorität: 19.08.2020 DE 102020121752
(43) Veröffentlichungstag der Anmeldung: 28.06.2023
(73) Patentinhaber: Turck Holding GmbH, 58553 Halver (DE)
(72) Erfinder: SCHWAGMANN, Hermann, 32760 Detmold (DE); KREKLOW, Kevin, 79112 Freiburg (DE); MANTEI, Dirk, 32760 Detmold (DE)
(74) Vertreter: LBP Lemcke, Brommer & Partner Patentanwälte mbB
(86) Internationale Anmeldenummer: PCT/EP2021/072418
(87) Internationale Veröffentlichungsnummer: WO 2022/038018

(56) Entgegenhaltungen:
- US-A1- 2015 348 394
- US-B1- 10 084 266
- US-B2- 10 191 088

## Beschreibung

Die Erfindung betrifft ein System mit einem elektrischen Steckverbinder und einem daran angeschlossenen Kabel nach dem Oberbegriff des Anspruchs 1. Ein solches System ist aus der US 10 191 088 B2 bekannt. Die Erfindung betrifft ferner ein Verfahren zum Betreiben eines solchen Systems mit einem elektrischen Steckverbinder, wobei der Steckverbinder eine Sensoreinrichtung zum Erfassen eines oder mehrerer elektrischer Betriebsparameter umfasst.

In vielen Bereichen, etwa der Fertigungs- und Automatisierungstechnik, werden Steckverbinder genutzt, um Kabel und weitere Einrichtungen miteinander zu verbinden. Eine Schwierigkeit kann dabei darin bestehen, die Funktionsweise von Kabeln und Verbindern sicherzustellen und bei eventuell auftretenden Verbindungsproblemen schnell beschädigte Komponenten zu identifizieren.

Bei bekannten Lösungen ist beispielsweise eine Stromversorgung mit einer Anzeige oder anderweitigen Informationsmöglichkeit vorgesehen, etwa über eine KommunikationsSchnittstelle, wobei aktuelle Leistungsdaten anhand der Angabe von Spannung und Stromstärke ausgegeben werden. Ferner können Diagnose-Informationen bei beteiligten Geräten erzeugt werden, wenn Unter- oder Überspannungen oder ein Spannungsausfall auftreten.

Eines der Probleme, die durch den Steckverbinder gelöst werden können, ist eine Überwachung der Stromversorgung mittels eines an den Steckverbinder angeschlossenen Kabels sowie des Kabelzustands.

Die US 2015/0348394 A1 offenbart eine elektrische Anschlussklemme mit einer integrierten elektrischen Schaltung, die mit einer Sensoreinrichtung, einer Steuereinrichtung und einer Kommunikationsschnittstelle ausgestattet sein kann.

In der US 10,084,266 B1 wird ein Ladekabel mit Steckverbindern zum Anschließen einer mit elektrischer Energie aufzuladenden Vorrichtung, beispielsweise eines elektromotorisch betriebenen Fahrzeugs oder eines digitalen Endgeräts, an eine Ladestation vorgeschlagen. Mittels einer integrierten Schaltung im Steckverbinder oder im Kabel findet eine Echtzeit-Überwachung des Ladevorgangs statt, um die aufzuladende Vorrichtung möglichst effizient zu laden und hierfür die Ladestation geeignet zu steuern.

Es ist die Aufgabe der Erfindung, ein System mit einem elektrischen Steckverbinder und einem daran angeschlossenen Kabel sowie ein Verfahren zum Betreiben dises Systems bereitzustellen, mit dem eine besonders zuverlässige und effiziente Nutzung einer hergestellten elektrischen Verbindung beziehungsweise der Verbindungen eines bestehenden Verteilungsnetzwerks gewährleistet werden kann.

Diese Aufgabe wird durch ein System der eingangs genannten Art mit den Merkmalen des Anspruchs 1 gelöst. Vorteilhafte Ausgestaltungen und Weiterbildungen der Erfindung sind in den abhängigen Ansprüchen angegeben.

Der elektrische Steckverbinder des Systems umfasst ein Gehäuse, zumindest einen eingangsseitigen Kontakt, zumindest einen ausgangsseitigen Kontakt und eine elektrische Schaltung, die innerhalb des Gehäuses angeordnet ist. Dabei weist die elektrische Schaltung eine Sensoreinrichtung, eine Steuereinrichtung und eine Kommunikationsschnittstelle auf, wobei die Sensoreinrichtung dazu eingerichtet ist, einen elektrischen Betriebsparameter zu erfassen und die Steuereinrichtung dazu eingerichtet ist, anhand des elektrischen Betriebsparameters Ausgabedaten zu erzeugen und mittels einer Kommunikationsschnittstelle auszugeben.

Die elektrische Schaltung kann beispielsweise eine Stromversorgungsschaltung, eine Sensorschaltung, einen Mikroprozessor und ein Telekommunikationsmodul- insbesondere ein Funkmodul - umfassen.

Im Betrieb einer Anlage, in welcher bekannte Ausführungen eines Steckverbinders eingesetzt werden, kann es zu Schäden an den Versorgungsleitungen, Verteilerkomponenten, beispielsweise Y-Verteiler, Kupplungen oder Verlängerungen, oder der versorgten elektrischen Geräte kommen. In der Folge können ganze Anlagenteile ausfallen und es muss sehr mühsam festgestellt werden, an welcher Stelle die Verbindung unterbrochen oder eine Schadenseinwirkung ist. Die Anlage fällt entsprechend lange aus.

Der elektrische Steckverbinder der Erfindung erlaubt es nun, an den jeweiligen Anschlussstellen der Versorgungsleitung, beispielsweise direkt an den Pins der Steckverbinder zum Beispiel kontinuierlich die Spannungen und/oder Stromstärken zwischen den Versorgungspins zu messen. Ferner können die erfassten Werte kommuniziert und/oder zur späteren Ausgabe gespeichert werden. Dies geschieht in dem Steckverbinder der Versorgungsleitungen oder mit zum Zwecke der Inbetriebnahme vorinstallierten Messstellen, etwa M12-zu-M12-Messbrücken mit denselben Eigenschaften wie der beschriebene Steckverbinder. Beispielsweise kann eine gemessene Spannungsdifferenz an verschiedenen Versorgungspunkten in der weiteren Betrachtung als Information zur Bewertung des Anlagebetriebs dienen.

Zum Beispiel kann eine erfasste Spannungs- und/oder Stromdifferenz an den Versorgungsmesspunkten unter anderem dazu dienen:
- die ausreichende Betriebsspannung der zu versorgenden Geräte im Betrieb sicher zu stellen,
- die Spannungsabfälle auf den Zuleitungen zu ermitteln,
- bei bekannten Leitungswiderständen laufend Betriebsströme zu ermitteln, wobei die Leitungswiderstände beispielsweise in einem Probebetrieb über die Spannungsdifferenz mit einer Stromquelle ermittelbar sind,
- Spannungsabfälle über die Zeit zu bewerten, etwa um Lastspitzen zu erkennen oder um eine sich verschlechternde Kabelqualität zu erfassen
- ein *Condition Monitoring,* das heißt eine fortlaufende Zustandsüberwachung einer elektrischen Verbindung und/oder Datenverbindung, zu implementieren,
- den Gesundheitszustand einer Gesamtanlage eines Systems abzuleiten und Wartungsintervalle zu planen, und/oder
- Fehlerquellen schnell zu lokalisieren, insbesondere indem ein schleichender Kabelfehler oder ein Kabelausfall lokalisiert wird.

In der Automatisierungs-Industrie werden Gerätesteckverbinder mit vorkonfektionierten Kabeln eingesetzt, um Signale und/oder Leistungen für Aktoren und Sensoren zu übertragen. Als Beispiel sei hier ein M12-Steckverbinder genannt, der über mehrere Pins und entsprechende Leitungen eine Verbindung zu einem Gerät und den zugehörigen Kabeln schafft. Diese Verbindungen sind typischerweise wasser- und staubdicht verschlossen.

Die Verbindungen werden beispielsweise genutzt, um Spannungsquellen mit Feldgeräten und/oder Sensoren zu verbinden und diese so mit Leistung zu versorgen. Dies geschieht nach einem sogenannten Stern- oder Daisy-Chain-Verteilungsprinzip. Im ersten Fall werden die zu versorgenden Geräte jeweils durch eine Versorgungsleitung zur Spannungsquelle (logisch sternförmig) versorgt. Im zweiten Fall wird ein erstes Gerät mit der Spannungsquelle verbunden und weitere Geräte durch eine weitere Versorgungsleitung an das jeweils andere in einer Linie angeschlossen. Dieses Verteilungsprinzip kann innerhalb einer Anlage auch kombiniert werden.

Feldgeräte und Sensoren benötigen für den Betrieb beispielsweise eine Betriebsspannung, die mit Toleranzen etwa 24 V Gleichspannung beträgt, und jedes Gerät ruft im Betrieb eine bestimmte Leistung, also einen bestimmten Betriebsstrom, von der Spannungsquelle ab.

Ein Nachteil derzeit bekannter Lösungen liegt darin, dass die Konfektionierung der Spannungsversorgung im Vorfeld anhand der vorhandenen Leistungsbedarfe vorgenommen werden muss. Dazu muss der Anwender die Leistungen der betriebenen Geräte kennen und die Spannungsversorgung entsprechend auslegen. Die Spannungsversorgung muss die Geräte ausreichend versorgen können, das heißt die Summe der Betriebsleistungen muss bereitgestellt werden, und die Betriebsspannung muss an allen Geräten innerhalb der geforderten Toleranzgrenzen angeboten werden. Die Betriebsspannung reduziert sich in der Anlage allerdings in Abhängigkeit der Ströme und der Leitungslängen. Die Betriebsströme der Geräte wiederum sind abhängig von der Höhe der bereitgestellten Gleichspannung am Gerät.

Der elektrische Steckverbinder der Erfindung kann beispielsweise bei einer Stromversorgung in der industriellen Produktion oder in der Logistik eingesetzt werden. Ferner sind verschiedene Anwendungen in der Automatisierung und Fertigungstechnik denkbar sowie der Automobilbereich oder andere technische Felder, bei denen ein hoher Sicherheitsstandard und große Zuverlässigkeit gewährleistet werden müssen.

Der elektrische Steckverbinder erlaubt daher vorteilhafterweise eine Erkennung einer Schwachstelle in einer Spannungsversorgung oder in einem Versorgungsnetzwerk, insbesondere bereits vor dem Auftreten eines Fehlers. Es kann ferner eine besonders schnelle Diagnose über die Schadenstelle gewährleistet werden, etwa bei einem Kabelbruch. Ferner kann eine besonders bedarfsgerechte Installation und Inbetriebnahme erreicht werden. Dadurch kann beispielsweise ein Stillstand eines Lagers oder einer Anlage vermieden werden. Gegebenenfalls wird die für eine Fehlersuche benötigte Zeit reduziert. Zudem kann eine Überdimensionierung eines Versorgungssystems vermieden werden.

Der elektrische Steckverbinder kann auf verschiedene Weisen ausgebildet sein. Er ist dabei nicht auf Verbinder beschränkt, die durch reines Stecken verbunden werden können, sondern es sind auch andere Verbinder umfasst. Dabei kann vorgesehen sein, dass die eingangsseitigen Kontakte zumindest teilweise durch einen Steckvorgang mit einem komplementären Stecker verbindbar sind. Insbesondere können eingangsseitigen Kontakte in unterschiedlicher Weise ausgebildet sein, etwa anhand bestehender Standards und Normen. Beispielsweise kann mittels des Steckverbinders eine Schraubverbindung gemäß IP67, etwa mit verschiedenen M12-Kodierungen, eine 7/8"-Verbindung oder eine Verbindung gemäß "M12 Power" für hohe Leistungsanforderungen implementiert werden.

Der elektrische Steckverbinder stellt eine Stromversorgung mit der gewünschten Qualität sicher, insbesondere hinsichtlich der Leistungsbedarfe in einem Versorgungsnetzwerk. Die dabei zu erreichende Genauigkeit kann von der jeweiligen Infrastruktur oder dem technischen Kontext abhängen, beispielsweise wenn der Steckverbinder in einer 12V-Umgebung eingesetzt wird.

Zum Beispiel können bei dem Steckverbinder Eingangs- und/oder Ausgangsspannungen ermittelt werden, etwa über die Messung einer Stromstärke, und es kann somit eine Spannungsdifferenz zwischen Steckverbindern berechnet werden. Insbesondere wird auf diese Weise ein Spannungsabfall erfasst. Ferner kann eine Kabeltemperatur erfasst werden, die ein Hinweis für den zum Beispiel temperaturabhängigen elektrischen Widerstand der Verbindung darstellen kann.

Ferner kann eine Überwachung des Kabelzustands implementiert werden, etwa um ein beschädigtes Kabel zu identifizieren.

Dabei können beispielsweise ein Microcontroller und/oder eine Speichereinheit und/oder eine Spannungsversorgungschaltung direkt in den Steckverbinder integriert sein. Ferner kann ein Messsystem für eine Spannung vorgesehen sein, etwa an einem Versorgungs-Pin. Die Kommunikationsschnittstelle kann ferner kabelgebunden oder kabellos, etwa mittels einer Funkübertragung wie etwa Bluetooth implementiert werden.

Der zumindest eine ausgangsseitige Kontakt kann auf verschiedene, an sich bekannte Weisen ausgebildet sein. Es können mehrere ausgangsseitige Kontakte vorgesehen sein, die auch unterschiedlich ausgebildet sein können; insbesondere kann zumindest ein ausgangsseitiger Kontakt zum Herstellen einer elektrischen Verbindung zur Leistungsübertragung und zumindest ein ausgangsseitiger Kontakt zum Herstellen einer Datenverbindung geeignet sein.

Der zumindest eine ausgangsseitige Kontakt kann so ausgebildet sein, dass an ihn ein Kabel oder eine Leitung anschließbar ist; der Anschluss kann dabei dauerhaft ausgebildet sein, etwa bei einer verlöteten oder verschweißten Verbindung, oder es kann eine lösbare Verbindung hergestellt werden, etwa durch Klemmen, Schrauben oder auf andere an sich bekannte Weise zum Anschließen eines Kabels. Bei einer Ausbildung ist ein Kabel oder eine Leitung an den ausgangsseitigen Kontakt angeschlossen. Insbesondere ist ein Kabel mit mehreren Leitungen vorgesehen, wobei an mehrere ausgangsseitige Kontakte des elektrischen Steckverbinders je eine Leitung angeschlossen. Bei einer weiteren Ausbildung kann der ausgangsseitige Kontakt eine Kontaktfläche zum Herstellen einer optischen Datenverbindung umfassen, insbesondere zum Anschließen einer optischen Leitung .

Der zumindest eine eingangsseitige Kontakt kann auf verschiedene, an sich bekannte Weisen ausgebildet sein. Es können mehrere eingangsseitige Kontakte vorgesehen sein, die auch unterschiedlich ausgebildet sein können; insbesondere kann zumindest ein eingangsseitiger Kontakt zum Herstellen einer elektrischen Verbindung zur Leistungsübertragung und zumindest ein eingangsseitiger Kontakt zum Herstellen einer Datenverbindung geeignet sein.

Der zumindest eine eingangsseitige Kontakt ist insbesondere so ausgebildet, dass ein komplementärer Steckverbinder angeschlossen werden kann. Der eingangsseitige Kontakt kann dazu beispielsweise eine Pin oder eine Buchse umfassen, er kann ferner als eine Kontaktfläche ausgebildet sein. Bei einer weiteren Ausbildung kann der eingangsseitige Kontakt eine Kontaktfläche zum Herstellen einer optischen Datenverbindung umfassen.

Bei einer weiteren Ausbildung ist die elektrische Schaltung zumindest teilweise außen an dem Gehäuse des elektrischen Steckverbinders angeordnet.

Der erfasste Betriebsparameter kann dabei beispielsweise ein Wert sein, der dem Steckverbinder und/oder einem an diesen angeschlossenen Kabel oder einer Leitung und/oder einer angeschlossenen weiteren Einheit zugeordnet ist. Insbesondere ist der Betriebsparameter so gewählt, dass er eine Charakteristik einer Leistungs- und/oder Datenübertragung darstellt.

Bei dem Betriebsparameter kann es sich um verschiedene Größen handeln, beispielsweise Spannung und/oder Strom. Ferner können andere Größen als Betriebsparameter erfasst werden, etwa eine Kapazität, Induktivität, Widerstand, Impedanz, Frequenz, eine thermische Eigenschaft und/oder weitere Leitungscharakteristiken.

Die Erfassung erfolgt insbesondere auf an sich bekannte Weise, etwa durch ein Sensorelement zum Messen einer Stromstärke oder einer Spannung. Der Betriebsparameter kann beispielsweise zwischen eingangs- und ausgangsseitigen Kontakten erfasst werden, etwa durch ein in Reihe oder in Serie geschaltetes Sensorelement der Sensoreinrichtung. Dabei kann die Messung bei einer Verbindung erfolgen, die zwischen einem eingangsseitigen Kontakt und einem ausgangsseitigen Kontakt besteht. Ferner kann eine Erfassung des elektrischen Betriebsparameters zwischen verschiedenen Verbindungen erfolgen, die jeweils zwischen der Verbindung zugeordneten eingangs- und ausgangsseitigen Kontakten besteht. Zum Beispiel können dadurch Potentialunterschiede zwischen zwei elektrischen Leitungen gemessen werden, die an den Steckverbinder angeschlossen sind.

Bei einer Ausbildung sind die Sensoreinrichtung und die Steuereinrichtung auf einem gemeinsamen Trägerkörper angeordnet, und der Trägerkörper ist als aus Kunststoff spritzgegossener Schaltungsträger ausgebildet, auf welchem metallische Leiterbahnen aufgebracht sind. Der Trägerkörper und/oder zumindest ein Teil der elektrischen Schaltung können mittels eines 3D-Druck-Verfahrens oder mittels additiver Fertigung hergestellt werden. Alternativ oder zusätzlich kann ein Spritzgussverfahren verwendet werden, um das Gehäuse und einen optional damit verbundenen Trägerkörper herzustellen.

Bei einer Ausbildung ist die Steuereinrichtung dazu eingerichtet, anhand des erfassten Betriebsparameters Speicherdaten zu erzeugen und mittels einer Speichereinrichtung zu speichern. Die Speicherdaten können zum Beispiel ein bestimmtes Datenformat aufweisen.

Dadurch können die Daten vorteilhafterweise besonders flexibel bereitgestellt werden und es können historische Daten ausgewertet werden. Insbesondere kann eine zeitliche Entwicklung des erfassten Betriebsparameters bestimmt werden.

Dabei ist die Speichereinrichtung insbesondere in den elektrischen Steckverbinder integriert und beispielsweise von der in dem Gehäuse angeordneten elektrischen Schaltung umfasst.

Die Ausgabe kann dabei auf verschiedene Weisen erfolgen. Zum Beispiel kann die Ausgabe automatisch erzeugt und ausgegeben werden, etwa in regelmäßigen Intervallen, etwa in Zeitintervallen oder in Abhängigkeit von der Anzahl der Inbetriebnahmen einer Einheit, oder die Ausgabe kann auf Abruf erfolgen, etwa wenn ein Abrufsignal erfasst wird, beispielsweise wenn ein entsprechendes Signal von einer externen Einheit empfangen wird.

Bei einer weiteren Ausbildung ist die Steuereinrichtung dazu eingerichtet, die Ausgabedaten automatisch und/oder auf ein Empfangen eines Anfragesignals hin auszugeben.

Dadurch kann vorteilhafterweise besonders flexibel auf die erfassten Daten zugegriffen werden.

Die Ausgabe kann beispielsweise in regelmäßigen Zeitintervallen erfolgen. Sie kann ferner durch bestimmte Ereignisse, ein Über-/Unterschreiten eines Schwellenwerts für den erfassten Betriebsparameter oder auf andere Weise automatisch ausgelöst werden. Ein Anfragesignal kann auf verschiedene Weise erzeugt und von der Steuereinrichtung empfangen werden, insbesondere über die Kommunikationsschnittstelle. Das Anfragesignal kann beispielsweise digital ausgebildet sein, es kann jedoch auch ein analoges Signal umfassen, etwa eine Betätigung eines Schalters oder ein Empfangen eines bestimmten analogen Datensignals.

Bei einer Weiterbildung umfasst der erfasste oder ermittelte Betriebsparameter eine Spannung, eine Stromstärke, eine Feldstärke, einen Widerstand, eine Impedanz, eine Induktivität, eine Kapazität, eine Temperatur und/oder einen Luftfeuchtigkeitswert.

Dadurch können vorteilhafterweise besonders relevante Parameter des Betriebs erfasst werden.

Die Sensoreinrichtung kann beispielsweise dazu eingerichtet sein, eine Temperatur und Luftfeuchte zu erfassen.

Der erfasste elektrische Betriebsparameter kann dabei beispielsweise ein Wert sein, der dem Steckverbinder und/oder einem an diesem angeschlossenen Kabel oder einer Leitung und/oder einer angeschlossenen weiteren Einheit zugeordnet ist. Insbesondere ist der Betriebsparameter so gewählt, dass er eine Charakteristik einer Leistungs- und/oder Datenübertragung darstellt.

Bei dem Betriebsparameter kann es sich um verschiedene Größen handeln, beispielsweise Spannung und/oder Strom. Ferner können andere Größen als Betriebsparameter erfasst werden, etwa eine Kapazität, Induktivität, Widerstand, Impedanz, Frequenz, eine thermische Eigenschaft und/oder weitere Leitungscharakteristiken. Eine Feldstärke kann beispielweise mittels eines Hall-Sensors erfasst werden.

Beispielsweise kann an den Steckverbinder ein Kabel angeschlossen sein, insbesondere an den ausgangsseitigen Kontakt des elektrischen Steckverbinders.

Bei einer Ausbildung ist ein Kabel mit zwei elektrischen Steckverbindern der Erfindung verbunden, wobei das Kabel insbesondere mit einem ersten Ende an dem ausgangsseitigen Kontakt eines ersten Steckverbinders und mit einem zweiten Ende an einem ausgangsseitigen Kontakt eines zweiten Steckverbinders angeschlossen ist.

Beim Erfassen des elektrischen Betriebsparameters kann beispielsweise eine Differenzspannung zwischen den Steckverbindern ermittelt werden, insbesondere berechnet nach der Formel U_{diff} = U₁ - U₂, wobei U_{diff} die Differenzspannung, sowie U₁ und U₂ die am ersten beziehungsweise zweiten Steckverbinder gemessenen Spannungen bezeichnen.

Beim Erfassen des elektrischen Betriebsparameters kann beispielsweise ein Leitungswiderstand zwischen den Enden des Kabels, insbesondere der Widerstand zwischen dem ersten und zweiten Steckverbinder ermittelt werden.

Eine solche Messung kann beispielsweise der Erkennung von gebrochenen Leitungen und/oder der Erkennung von kurzfristigen Unterbrechungen der Leitfähigkeit des Kabels, etwa bei einem Wackelkontakt dienen.

Ferner kann ein Isolationswiderstand zwischen an den Steckverbinder angeschlossenen Leitern als Betriebsparameter erfasst werden.

Ferner kann eine Stromstärke durch einzelne an den Steckverbinder angeschlossene Leiter als Betriebsparameter erfasst werden.

Beispielsweise kann eine Messung des Stroms indirekt über ein elektrisches oder magnetisches Feld um den Leiter erfolgen. Insbesondere wird hier ein Feld-Sensor, ein Strom-Sensor, ein Hall-Sensor und/oder eine andere Sensorschaltung genutzt.

Es kann vorgesehen sein, dass der erfasste Betriebsparameter, etwa eine gemessene Spannung oder Stromstärke, und/oder ein anhand des Betriebsparameters bestimmter Wert mittels der Kommunikationsschnittstelle über kabelgebundene oder kabellose Kommunikation übertragen wird. Die Ausgabedaten werden dabei ausgegeben und/oder sind von außen abrufbar.

Bei einer Ausbildung ist die Ausgabe mittels der Kommunikationsschnittstelle drahtgebunden und/oder drahtlos ausgebbar. Die Kommunikationsschnittstelle kann dabei als Funkschnittstelle ausgebildet sein oder eine solche umfassen.

Dadurch kann die Ausgabe vorteilhafterweise besonders einfach abgerufen werden.

Es können an sich bekannte Verfahren verwendet werden, etwa Bluetooth, 5G, RFID, ein Verfahren der Nachfeldkommunikation und/oder WLAN/LAN. Die Kommunikationsschnittstelle kann beispielsweise von einem Telekommunikationsmodul umfasst sein. Ferner kann ein Antennenelement vorgesehen sein, das dazu genutzt wird, elektromagnetische Wellen für eine datentechnische Verbindung zu senden und/oder zu empfangen.

Bei einer kabelgebundenen Ausgabe können an sich bekannte Verfahren genutzt werden, etwa um Daten über eine Leitung zur elektrischen Versorgung bereitzustellen, wobei eine Modulation eines Spannungswertes erfolgt, um die übertragenen Daten zu übertragen.

Erfindungsgemäß weist die elektrische Schaltung ferner eine Speichereinrichtung auf. Diese kann dazu eingerichtet sein, erfasste Betriebsparameter und/oder Ausgabedaten zu speichern, wobei von der Speichereinrichtung gespeicherte Daten über die Kommunikationsschnittstelle auslesbar sind.

Dadurch können vorteilhafterweise zeitlich zurückliegende Daten besonders leicht ausgewertet werden. Insbesondere muss keine ständige Ausgabe erfolgen, sondern es kann ausreichen, die Speicherdaten nur zu bestimmten Anlässen der Auswertung abzurufen beziehungsweise auszugeben.

Die gespeicherten Daten können etwa anhand des erfassten Betriebsparameters innerhalb eines bestimmten Zeitintervalls bestimmt werden, das heißt, die Speicherdaten können die innerhalb des Zeitintervalls erfassten Werte des Betriebsparameters betreffen und/oder für ein bestimmtes Zeitintervall gespeichert werden. Ferner kann eine Speicherung durch ein vorbestimmtes Ereignis ausgelöst werden, etwa ein externes Steuersignal, das Auftreten eines Fehlers, ein Über- oder Unterschreiten eines Grenzwertes oder bei einer bestimmten zeitlichen Veränderung des erfassten Betriebsparameters. Beispielsweise kann eine Speicherung ausgelöst werden, wenn eine rasche Veränderung oder Verschlechterung des erfassten Betriebsparameters oder eines davon abgeleiteten Wertes bestimmt wird.

Die Speicherdaten können ferner nach dem Prinzip eines Ringspeichers erzeugt und gespeichert werden. Dabei kann vorgesehen sein, dass der Wert des erfassten Betriebsparameters und/oder ein anhand dessen bestimmter Wert stets für eine bestimmte zurückliegende Zeitdauer gespeichert und anschließend wieder verworfen wird. Bei einem bestimmten Ereignis, etwa ein externes Steuersignal, das Auftreten eines Fehlers, ein Über- oder Unterschreiten eines Grenzwertes oder bei einer bestimmten zeitlichen Veränderung des erfassten Betriebsparameters, kann auf die in dem Ringspeicher gespeicherten Daten zugegriffen werden und es steht die Entwicklung des Betriebsparameters über einen definierten Zeitraum für eine Auswertung zur Verfügung.

Ein Zeitintervall kann dabei so definiert sein, dass es den Ablauf einer bestimmten Zeitdauer bezeichnet; es kann jedoch auch eine bestimmte Anzahl vorgegebener Ereignisse bezeichnen, etwas Schaltvorgänge oder ähnliches.

Erfindungsgemäß ist ferner ein Kabel vorgesehen, das an den zumindest einen ausgangsseitigen Kontakt angeschlossen ist. Dabei weist das Kabel einen Kabel-Parameter auf, wobei bei der Speichereinrichtung ein Wert des Kabel-Parameters gespeichert ist. Der Kabel-Parameter kann beispielsweise eine Länge, einen Widerstand, einen maximalen Wert für Stromstärke, Spannung und/oder Leistung, eine Induktivität, eine Kapazität, einen thermischen Wert, eine Materialeigenschaft oder eine Typenbezeichnung umfassen.

Dadurch werden vorteilhafterweise Daten des angeschlossenen Kabels bereitgestellt, die häufig konstant sind und bereits vorteilsweise im Fertigungsprozess integrierte, einfache Messmethoden und/oder nach einer einmaligen Messung bereitgestellt werden. Dies ermöglicht eine umfassendere Auswertung des erfassten Betriebsparameters.

Das Kabel kann auf verschiedene, an sich bekannte Weisen ausgebildet sein. Es ist insbesondere zur Leitung beziehungsweise Übertragung von elektrischer Leistung, Strom, Spannung, Signalen und/oder optischen Signalen geeignet sein. Insbesondere kann ein Kabel mehrere Leitungen umfassen, die äquivalent oder für verschiedene Übertragungsmodi ausgebildet sein können.

Die Speichereinrichtung kann beispielsweise genutzt werden, um Informationen über den Steckverbinder und/oder ein angeschlossenes Kabel zu speichern.

Beispielsweise kann eine Leitungslänge eines vorkonfektionierten Kabels gespeichert werden. Die Länge des Kabels ist in diesem Fall bereits bekannt und diese Information kann daher direkt bei der Herstellung des elektrischen Steckverbinders mit dem Kabel für die Speichereinrichtung bereitgestellt werden.

Beispielsweise können verschiedene Produktionsparameter und/oder Identifikationsdaten über den Steckverbinder und/oder ein angeschlossenes Kabel gespeichert sein. Zum Beispiel kann eine Typenbezeichnung hinterlegt werden.

Beispielsweise kann ein elektrischer Widerstand einer Leitung, die an den Steckverbinder angeschlossen ist, hinterlegt werden, wobei dieser Widerstand insbesondere werkseitig bei der Herstellung gemessen wird.

Beispielsweise kann bei der Herstellung des Steckverbinders mit angeschlossenem Kabel ein Kalibrierungsschritt ausgeführt werden und die Speichereinrichtung kann Kalibrierungsdaten speichern; Kalibrierungsdaten können verschiedene Werte von Parametern sein, die spezifisch für das Kabel und/oder den Steckverbinder sind und die für den Betrieb des Kabels und/oder Steckverbinders und/oder einer versorgten Einheit relevant sind.

Beispielsweise kann die Speichereinrichtung einen Isolationswiderstand zwischen einzelnen Leitern eines an den Steckverbinder angeschlossenen Kabels speichern, wobei dieser Isolationswiderstand insbesondere werkseitig bei der Herstellung und/oder zu einem späteren Zeitpunkt gemessen und auf der Speichereinrichtung hinterlegt werden kann.

Beispielsweise können auf der Speichereinrichtung Kennwerte zur Entwicklung des Leitungswiderstandes in Abhängigkeit von der Temperatur hinterlegt werden.

Ferner kann der gespeicherte Kabel-Parameter so gebildet sein, dass er das Bestimmen eines weiteren Parameters erlaubt. Dieser weitere Parameter muss dann nicht direkt erfasst werden. Beispielsweise kann ein Wert einer thermischen Isolation des Kabels gespeichert sein und es kann im Betrieb bestimmt werden, welche Temperatur das Kabel hat beziehungsweise wie viel Wärme es abgibt. Auf diese Weise kann etwa eine drohende Überhitzung des Kabels rechtzeitig erkannt werden.

Es können Beziehungen zwischen verschiedenen Kabel-Parametern beziehungsweise zwischen Umgebungsparametern und Kabel-Parametern für den Betrieb des Kabels und/oder des Steckverbinders hinterlegt werden. Beispielsweise können auf der Speichereinrichtung Parameter betreffend eine Strombelastbarkeit der angeschlossenen Leitungen gespeichert sein, insbesondere auch in Abhängigkeit von der Temperatur. Zum Beispiel können Daten einer Kennlinie gespeichert sein, mittels derer anhand einer erfassten Temperatur eine Belastbarkeit bestimmbar ist, etwa ein maximal zulässiger Wert einer Leistung, Spannung und/oder Stromstärke.

Beispielsweise können auf der Speichereinrichtung Daten betreffend eine Wärmeableitfähigkeit einer Kabelisolierung eines an den Steckverbinder angeschlossenen Kabels gespeichert sein, wobei insbesondere auch Daten über eine Abhängigkeit dieser Wärmeableitfähigkeit von bestimmten Einbaubedingungen gespeichert sein können.

Ferner kann eine Möglichkeit bereitgestellt werden, nachträglich weitere Informationen auf der Speichereinrichtung des Steckverbinders zu hinterlegen, insbesondere Kabel-Parameter. Beispielsweise können die Steuereinrichtung und die Kommunikationsschnittstelle dazu eingerichtet sein, eine Bedienoberfläche bereitzustellen, mittels derer die weiteren erfasst werden können, etwa anhand einer Nutzereingabe und/oder anhand eines von einer externen Einheit empfangenen Signals.

Gespeicherte weitere Informationen können etwa Einbaubedingungen betreffen, welche die Wärmeableitfähigkeit beeinflussen können. Zum Beispiel kann die Wärmeableitfähigkeit davon abhängig sein, ob ein Kabel in einem isolierenden Material verlegt wurde oder ob ein umgebendes Material zur Aufnahme von abgeleiteter Wärmeenergie geeignet ist.

Ferner könne die weiteren Informationen etwa eine Umgebungstemperatur betreffen, zum Beispiel wenn diese als fester Wert angenommen werden kann, etwa beim Einsatz in einer klimatisierten Halle oder einem Kühlhaus.

Ferner könne die weiteren Informationen etwa einen individuellen Grenzwert für eine Strombelastung betreffen, insbesondere um beim Einsatz bereitstehende Leitungsreserven angeben zu können. Die weiteren Informationen können ferner Informationen über Parameter der elektromagnetischen Verträglichkeit betreffen, etwa im Zusammenhang mit Merkmalen einer Abschirmung.

Die weiteren Informationen können zudem etwa individuelle Grenzwerte für die Spannung betreffen, die an eine Leitung und/oder ein Kabel angelegt werden kann. Ferner können die weiteren Informationen andere Grenzwerte für die Leitung und/oder das Kabel betreffen, etwa eine Stromstärke.

Die weiteren Informationen können zudem etwa Identifikationsdaten für den Steckverbinder und/oder ein angeschlossenes Kabel betreffen, etwa eine Modell- oder Typenbezeichnung, Seriennummer, Artikelnummer oder ähnliches.

Ferner kann eine automatische Erfassung zusätzlicher Daten und deren Hinterlegung auf der Speichereinrichtung durch die Steuereinrichtung vorgesehen sein, etwa durch eine Verbindung zu einer Datenbank oder einer vorgegebenen Datenquelle.

Bei einer Ausbildung weist die elektrische Schaltung ferner eine Lokalisierungseinheit auf. Insbesondere umfassen die Ausgabedaten eine mittels der Lokalisierungseinheit erfasste Lokalisierungsinformation. Zur Lokalisierbarkeit des Steckverbinders können an sich bekannte Verfahren genutzt werden, etwa mittels 5G- oder GPS-Technologie oder mittels anderer Verfahren.

Dadurch kann vorteilhafterweise die Wartung erleichtert werden, da gegebenenfalls die Quelle einer Fehler- oder Alarmmeldung leicht zu identifizieren ist.

Die Lokalisierungsinformationen sind dazu geeignet, eine Anordnung des Steckverbinders und/oder eines an diesen angeschlossenen Kabels zu bestimmen, insbesondere relativ zu einem Ausgangspunkt, etwa einer Zentraleinheit oder einer Spannungsquelle. Beispielsweise werden Lokalisierungsinformation ein einem engmaschigen lokalen 5G-Netz relativ zu den Positionen von Sendestationen ermittelt sowie mithilfe Verfahren wie Laufzeit- und/oder Winkelbestimmung anhand der Funksignale ermittelt.

Dabei sind die Lokalisierungsinformationen der Elektronik- und Kommunikationseinheit des Steckverbinders zugeordnet; sie können beispielsweise mittels der integrierten Lokalisierungseinheit erfasst werden oder bei weiteren Ausbildungen auf andere Weise bereitgestellt werden, etwa indem sie bei der Installation des Steckverbinders eingegeben werden. Zum Beispiel können Lokalisierungsinformationen relativ zu einer oder mehreren Referenzpositionen bestimmt und hinterlegt werden. Ferner können die Lokalisierungsinformationen beschreibend gebildet sein, etwa "neben einem anderen Element X", "in Schrank Y" oder auf andere Weise durch Bezugnahme auf andere Elemente. Anhand der Lokalisierungsinformationen kann etwa eine Erkennung einer Topologie der Leitungen durchgeführt werden beziehungsweise aus der auf die einzelnen Leitungen bezogenen Topologie kann eine Topologie eines gesamten (Spannungs-)Versorgungsnetzwerks bestimmt werden. Beispielsweise kann anhand einer Differenz der gemessenen Stromstärken und/oder Spannungen ermittelt werden, wie viel Leistungsaufnahme an einzelnen Knotenpunkten, insbesondere auch an Verteilerstationen, durch angeschlossene Geräte erfolgt.

Der elektrische Steckverbinder kann beispielsweise für ein Verfahren zum *Condition Monitoring* beziehungsweise zur Überwachung einer Kabelverbindung genutzt werden. Dabei kann die Kabelverbindung für eine Übertragung von Daten und/oder elektrischer Leistung eingerichtet sein.

Dabei kann beispielsweise eine Berechnung von Kennwerten erfolgen und es kann geprüft werden, ob definierte Alarmbedingungen vorliegen. Insbesondere wird dabei der erfasste Betriebsparameter mit einem definierten Schwellenwert verglichen und bei Überbeziehungsweise Unterschreiten des Schwellenwerts wird ein Alarm ausgegeben.

Es kann ein Schwellenwert vorgegeben sein, mittels dessen eine Alarmbedingung definiert wird. Der schwellenwert kann ferner dynamisch bestimmt werden, etwa in Abhängigkeit von dem erfassten Betriebsparameter und/oder einem Umgebungsparameter, wie etwa Temperatur, Feuchtigkeit oder Anforderungen eines angeschlossenen Geräts.

Dabei kann die Verarbeitung des erfassten Betriebsparameters und das Prüfen der Alarmbedingung mittels der elektrischen Schaltung des Steckverbinders ausgeführt werden.

Alternativ oder zusätzlich kann eine Verarbeitung durch eine externe Speicher- und/oder Berechnungseinheit erfolgen, wobei das Vorliegen der Alarmbedingung geprüft wird. Eine solche externe Speicher- und/oder Berechnungseinheit kann beispielsweise als Feldbusgerät oder -Steuerung ausgebildet sein.

Beispielsweise kann erkannt werden, wenn eine erfasste Stromstärke plötzlich sinkt oder sich Spannungsabfälle auf einer angeschlossenen Leitung ereignen. Dies kann beispielsweise auf den Ausfall eines nachgelagert angeschlossenen Feldbusgeräts, eines Sensors oder einer anderen angeschlossenen Einrichtung hinweisen.

Es kann eine Bewertung des Leitungszustandes aufgrund einer zeitlichen Entwicklung des erfassten Betriebsparameters bestimmt werden. Dabei kann beispielsweise ein erfasster Leitungswiderstand ausgewertet werden, etwa um Veränderungen der Eigenschaften eines Kabels zu erkennen, die durch fortschreitende Alterung, durch mechanische Beschädigungen und/oder durch Erwärmung oder Abkühlung des Kabels, etwa bei Kontakt mit einer Flüssigkeit wie Regen, bedingt sind.

Es kann eine Bewertung des Leitungszustandes aufgrund einer zeitlichen Entwicklung von Spannungsabfällen bestimmt werden. Auch hier können Veränderungen der Eigenschaften eines Kabels erkannt werden, die etwa durch eine Alterung, durch mechanische Beschädigungen oder durch Erwärmung oder Abkühlung des Kabels, etwa bei Kontakt mit einer Flüssigkeit wie Regen bedingt sind.

Es kann eine Kommunikation zwischen dem elektrischen Steckverbinder der Erfindung und angeschlossenen Geräten hergestellt werden, etwa einem Feldbusgerät, einer Kommunikationseinheit, etwa einem Switch, einem angeschlossenen Sensor, einem Netzteil oder anderen Geräten. Bei der Kommunikation besteht insbesondere eine datentechnische Verbindung zwischen dem Steckverbinder und dem Gerät. Ferner kann die datentechnische Verbindung bei der Kommunikation zwischen dem Steckverbinder und einer externen Einheit hergestellt werden und/oder die datentechnische Verbindung kann zwischen verschiedenen angeschlossenen und/oder verbundenen Einheiten über den Steckverbinder hergestellt werden.

Bei einem Beispiel kann eine Benachrichtigung durch den Steckverbinder ausgebbar sein, etwa wenn das Betreiben eines bestimmten angeschlossenen Geräts zu einer Überlastung der an den Steckverbinder angeschlossenen Leitung führen würde. Das Gerät kann dann abgeschaltet werden, insbesondere automatisch durch eine integrierte oder externe Steuereinrichtung. Ferner kann vorgesehen sein, dass das Gerät bei einer solchen Benachrichtigung einer drohenden Überlastung seine Stromaufnahme auf ein Minimum reduziert, etwa durch Abschalten der I/Os, und eine Meldung über den aufgetretenen Fehlerzustand ausgibt.

Bei einem weiteren Beispiel kann eine Benachrichtigung über die Belastbarkeit des Kabels an ein Netzteil übertragen werden. Das Netzteil kann daraufhin eine ausgegebene Stromstärke reduzieren oder zur Sicherheit eine Abschaltung ausführen oder einen Alarm beziehungsweise die Ausgabe einer Alarmbenachrichtigung auslösen.

Ferner kann eine Anzeige eines Strom/Spannungszustands an dem Steckverbinder selbst erfolgen, etwa mittels einer LED und/oder einer anderen Anzeigeeinrichtung.

Zum Beispiel kann ein grünes Leuchten der LED signalisieren, dass Spannung und Stromstärke innerhalb vorgegebener Grenzwerte liegen. Ein oranges oder gelbes Leuchten der LED kann eine drohende Überlastung beziehungsweise drohende Über- oder Unterspannung anzeigen. Ein rotes Leuchten der LED kann anzeigen, dass vorgegebene Grenzwerte überschritten werden. Bei weiteren Beispielen ist eine andere Art der Ausgabe vorgesehen.

Bei einer Ausbildung ist ein Kommunikations-Protokoll vorgesehen, mittels dessen mehrere Steckverbinder kommunizieren; die Kommunikation kann direkt erfolgen oder vermittelt durch eine zentrale Einheit, etwa eine externe Steuereinheit oder in von einer externen Steuereinheit umfasstes Element. Dabei können beispielsweise gemessene Betriebsparameter zwischen verschiedenen Kabeln verglichen werden, insbesondere zur Erkennung einer Topologie der Leitungen. Zum Beispiel kann eine Differenz der gemessenen Ströme beziehungsweise Stromstärken bestimmt werden. Anschließend kann ermittelt werden, wie viel Leistungsaufnahme an den einzelnen Knotenpunkten durch angeschlossene Geräte erfolgt. Dies erlaubt eine besonders einfache und effiziente Überwachung der Geräte und/oder der Kabel.

Bei einer Ausbildung kann vorgesehen sein, dass eine Alarmmeldung ausgegeben wird, wenn ein kritischer Zustand bestimmt wird, und die Alarmmeldung kann Lokalisierungsinformationen umfassen. Insbesondere können solche Lokalisierungsinformationen umfasst sein, die mittels einer Lokalisierungseinheit eines Steckverbinders erfasst werden.

Bei einer Ausbildung kann eine Erkennung von Einstreuungen in eine Leitung und/oder in den Steckverbinder vorgesehen sein, insbesondere induzierte Spannungen, die etwa durch externe Felder bedingt sind und beispielsweise von benachbart verlegten Leitungen oder elektrischen Motoren hervorgerufen werden.

Bei einer Ausbildung kann eine Erkennung von Fehlfunktionen angeschlossener Geräte durch ein abnormales Muster der Stromaufnahme vorgesehen sein. Dabei kann etwa erkannt werden, dass sich ein zeitlicher Verlauf der Stromaufnahme eines Geräts verändert, insbesondere sprunghaft, oder es kann ein Über- oder Unterschreiten eines vorgegebenen Grenzwerts erkannt werden. Die Erkennung kann beispielsweise für Verbraucher vorteilhaft sein, die nicht selbst über entsprechende Schutz- oder Diagnoseeinrichtungen verfügen, um beispielsweise einen mechanisch blockierten elektrischen Motor oder ein defektes Heizelement zu identifizieren und/oder zu diagnostizieren.

Zur Auswertung des erfassten elektrischen Betriebsparameters können Verfahren aus dem Bereich des Maschinenlernens oder der künstlichen Intelligenz angewandt werden. Insbesondere werden auf diese Weise irreguläre Muster einer Leistungsaufnahme erkannt. Die Auswertung kann in diesem Fall beispielsweise mittels einer externen Einheit erfolgen. Das Maschinenlernverfahren kann anhand historischer Werte des erfassten Betriebsparameters trainiert werden.

Ferner kann vorgesehen sein, dass eine Leitung unterbrochen wird, wenn eine vorgegebene Bedingung erfüllt ist, etwa das Über- oder Unterschreiten eines vorgegebenen Grenzwerts oder eine sprunghafte Änderung des erfassten Betriebsparameters. Die Unterbrechung der Leitung kann im Sinne einer an sich bekannten Schutzabschaltung ausgeführt werden, wobei beispielsweise die von dem elektrischen Steckverbinder umfasste elektrische Schaltung die Unterbrechung vornimmt und/oder auslöst. Dazu kann ein Schalter vorgesehen sein, der auf an sich bekannte Weise ausgebildet ist, etwa als Halbleiterelement; alternativ oder zusätzlich kann eine elektrische Sicherung vorgesehen sein.

Ferner kann eine Sicherung der Elektronik im Steckverbinder gegen eine, insbesondere kurzzeitige, Unterbrechung der Versorgungsspannung vorgesehen sein. Dazu kann beispielsweise ein Pufferkondensator vorgesehen sein.

Ferner kann eine Sicherung der Versorgungsspannung der Elektronik im Steckverbinder gegen eine, insbesondere kurzzeitige, Unterbrechung der Versorgungsspannung vorgesehen sein, etwa um eine Alarmmeldung bei Unterbrechung der Versorgungsspannung erzeugen und ausgeben zu können.

Das System umfasst ein Kabel mit einem ersten Kabelende und einem zweiten Kabelende, wobei das erste und/oder zweite Kabelende mit einem ausgangsseitigen Kontakt eines elektrischen Steckverbinders gemäß der vorliegenden Beschreibung verbunden ist.

Dieses System nutzt den elektrischen Steckverbinder der Erfindung und weist daher die gleichen Vorteile auf wie der elektrische Steckverbinder.

Ferner kann vorgesehen sein, dass das erste Kabelende mit einem ersten und das zweite Kabelende mit einem zweiten elektrischen Steckverbinder gemäß der vorliegenden Beschreibung verbunden sind. Ferner kann vorgesehen sein, dass zwischen dem ersten und dem zweiten elektrischen Steckverbinder eine Datenverbindung besteht, über welche die mittels des ersten und/oder zweiten Steckverbinders erfassten und erzeugten Daten, insbesondere der erfasste Betriebsparameter, gesendet und/oder empfangen werden können.

Bei einem Verfahren zum Betreiben eines Systems mit einem elektrischen Steckverbinder, wobei der Steckverbinder eine Sensoreinrichtung zum Erfassen eines elektrischen Betriebsparameters umfasst, wird ein Vergleich zwischen dem erfassten Betriebsparameter und einem Schwellenwert ausgeführt und in Abhängigkeit von dem Ergebnis des Vergleichs werden Ausgabedaten erzeugt und ausgegeben. Insbesondere kann der Vergleich durch eine von dem elektrischen Steckverbinder umfasste Steuereinrichtung ausgeführt werden.

Der Steckverbinder ist insbesondere gemäß der vorliegenden Beschreibung ausgebildet. Insbesondere können ein erster und ein zweiter Steckverbinder vorgesehen sein, die mit einem ersten beziehungsweise zweiten Ende eines Kabels verbunden und gemäß der vorliegenden Beschreibung ausgebildet sind.

Die Erzeugung und/oder Ausgabe der Ausgabedaten kann anhand eines Steuersignals ausgelöst werden. Ein solches Steuersignal kann beispielsweise von einer externen Einheit empfangen werden.

Das Verfahren ist dazu ausgebildet, die Vorrichtung zu betreiben. Es weist daher dieselben Vorteile auf wie die erfindungsgemäße Vorrichtung.

Insbesondere wird bei dem Vergleich zwischen dem erfassten Betriebsparameter und dem Schwellenwert das Vorliegen einer Bedingung geprüft. In Abhängigkeit davon, ob und gegebenenfalls in welcher Weise die Bedingung erfüllt ist, werden die Ausgabedaten erzeugt.

Der Schwellenwert für den Vergleich kann fest vorgegeben sein oder dynamisch bestimmt werden, etwa während einer iterativen Ausführung des Verfahrens.

Insbesondere kann bei dem Vergleich ein systemtypischer, zum Beispiel zeitabhängiger oder vorgegebener Sollwert und/oder ein in der Vergangenheit erfasster Wert des Betriebsparameters als Schwellenwert berücksichtigt werden.

Ferner können bei dem Vergleich des erfassten Betriebsparameters einer oder mehrere Schwellenwerte berücksichtigt werden und/oder es können einer oder mehrere Betriebsparameter erfasst und bei dem Vergleich berücksichtigt werden.

Der Vergleich des Betriebsparameters mit dem Schwellenwert kann auf verschiedene Weisen erfolgen: Der erfasste Betriebsparameter kann direkt mit einem fest vorgegebenen oder dynamisch bestimmten Schwellenwert verglichen werden; die Ausgangsdaten werden dann je nachdem erzeugt, ob der Schwellenwert über- oder unterschritten wird.

Alternativ oder zusätzlich kann eine Veränderung des erfassten Betriebsparameters mit der Zeit und/oder einem anderen Wert bestimmt und bei dem Vergleich herangezogen werden; die Ausgabedaten werden dann je nachdem erzeugt, wie die Veränderung verläuft. Beispielweise kann eine erste, zweite und/oder dritte Ableitung des erfassten Betriebsparameters nach der Zeit und/oder nach einer andere Variablen zum Vergleich genutzt werden, etwa um eine schnelle oder plötzliche Änderung zu identifizieren, die auf eine Beschädigung hindeuten kann, oder um eine schleichende Änderung zu identifizieren, etwa bei Verschleiß oder Alterungserscheinungen.

Mittels des Verfahrens kann beispielsweise eine durch den Steckverbinder hergestellte Verbindung zur Leistungs- und/oder Datenüberragung überwacht werden. Insbesondere kann ein Netzwerk mehrerer Steckverbinder und eines damit implementierten Spannungsversorgungsnetzwerkes nach einem Leistungsbedarf ausgerichtet werden und/oder es können Anomalien erkannt werden. Beispielweise kann anhand des erfassten Betriebsparameters eine schnelle Änderung elektrischer Eigenschaften eines angeschlossenen Kabels und/oder eines angeschlossenen Geräts erfasst werden.

Ferner kann in Abhängigkeit von dem Ergebnis des Vergleichs eine Reaktion auf eine Anomalie ausgelöst werden, etwa eine Abschaltung, eine Steuerung einer Leistungsaufnahme, eine Ausgabe eines Alarmsignals oder ein kontrolliertes Abschalten einer Komponente in dem Spannungsversorgungsnetzwerk. Mittels des Verfahrens kann zudem der Zustand des Versorgungsnetzwerkes überwacht werden, insbesondere hinsichtlich einer Leistungsfähigkeit der verwendeten Komponenten.

Nachfolgend wird die Erfindung anhand der anliegenden Zeichnungen näher erläutert. Es zeigen:
- **Figur 1**: ein Ausführungsbeispiel des elektrischen Steckverbinders; und
- **Figur 2**: ein Ausführungsbeispiel des Systems.

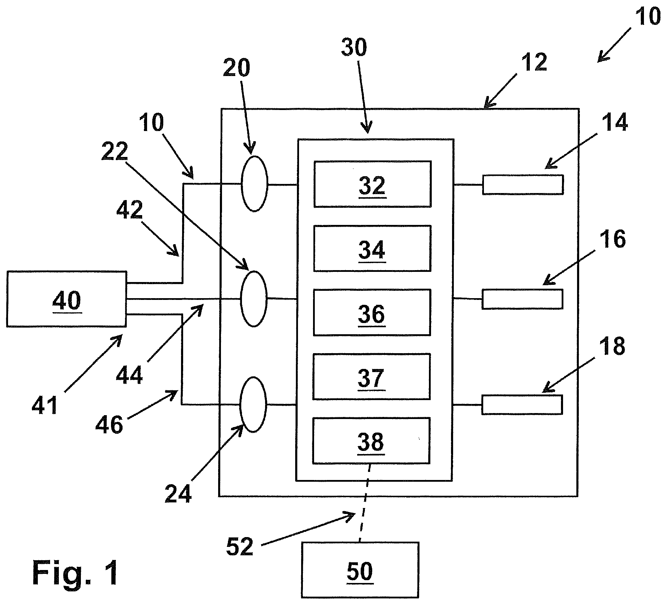

Mit Bezug zu **Figur 1** wird ein Ausführungsbeispiel des elektrischen Steckverbinders erläutert.

Bei dem ersten Ausführungsbeispiel weist der elektrische Steckverbinder 10 ein Gehäuse 12, in dem eingangsseitige 14, 16, 18 und ausgangsseitige Kontakte 20, 22, 24 angeordnet sind.

Der Steckverbinder 10 umfasst ferner eine elektrische Schaltung 30, die bei diesem Beispiel ebenfalls in dem Gehäuse 12 angeordnet ist.

Der Steckverbinder 10 umfasst ferner eine Sensoreinrichtung 32, eine Steuereinrichtung 34, eine Speichereinrichtung 36, eine Lokalisierungseinrichtung 37 und eine Kommunikationsschnittstelle 38.

Bei weiteren Ausführungsbeispielen können andere Einrichtungen umfasst sein, insbesondere können bestimmte dieser Einrichtung 32, 34, 36, 37, 38 fehlen und/oder auf andere Weise kombiniert sein.

Bei dem Ausführungsbeispiel sind die Sensoreinrichtung 32, die Steuereinrichtung 34, die Speichereinrichtung 36, die Lokalisierungseinrichtung 37 und die Kommunikationsschnittstelle 38 von der elektrischen Schaltung 30 umfasst. Sie können insbesondere auf einer Platine und/oder auf einem gemeinsamen Bauteil angeordnet sein.

Bei weiteren Ausführungsbeispielen sind die Einrichtungen 32, 34, 36, 37, 38 nicht oder nicht vollständig von der elektrischen Schaltung 30 umfasst. Sie können ferner zumindest teilweise außerhalb des Gehäuses 12 angeordnet sein.

Bei dem Ausführungsbeispiel ist jeder der ausgangsseitigen Kontakte 20, 22, 24 mit je einer Leitung 42, 44, 46 eines an den Steckverbinder 10 angeschlossenen Kabels 40 verbunden. Es handelt sich dabei bei dem Ausführungsbeispiel um elektrische Leitungen 42, 44, 46 zur Übertragung von Daten und/oder elektrischer Leistung. Bei dem Ausführungsbeispiel ist ein Ende 41 des Kabels 40 mit dem Steckverbinder 10 verbunden.

Die ausgangsseitigen Kontakte 20, 22, 24 sind mit der elektrischen Schaltung 30 verbunden. Diese Verbindungen sind in Figur 1 nur schematisch dargestellt. Es können andere Schaltungen und Verbindungen vorgesehen sein, insbesondere parallele und/oder serielle Schaltungen.

Auch die eingangsseitigen Kontakte 14, 16, 18 sind mit der elektrischen Schaltung 30 verbunden. Auch diese Verbindungen ist in Figur 1 nur schematisch dargestellt; auch hier können andere Schaltungen und Verbindungen vorgesehen sein, insbesondere parallele und/oder serielle Schaltungen.

Der Steckverbinder 12 ist so ausgebildet, dass auf an sich bekannte Weise eine Zuordnung der Leitungen 42, 44, 46 und der eingangsseitigen Kontakte 14, 16, 18 erfolgt. Beispielsweise kann das Kabel 40 mittels des Steckverbinders 10 an ein Gerät (nicht dargestellt) angeschlossen werden und/oder es können mehrere Kabel 40 miteinander verbunden werden.

Die Leitungen 42, 4, 46 sind bei dem Ausführungsbeispiel elektrisch leitend und zur Übertragung elektrischer Leistung und/oder Datensignale ausgebildet.

Bei weiteren Ausführungsbeispielen kann vorgesehen sein, dass zumindest einzelne der Leitungen 42, 44, 46 nur zur Übertragung von entweder elektrischer Leistung oder von elektrischen Datensignalen ausgebildet sind. Ferner kann zumindest eine Leitung 42, 44, 46 zur optischen Übertragung von Daten ausgebildet sein, insbesondere ein Lichtleiter oder eine Glasfaser.

Die Speichereinrichtung 36 umfasst bei dem Ausführungsbeispiel einen nicht-flüchtigen Datenspeicher. Dieser kann durch die Steuereinrichtung 34 angesteuert werden, um dort Daten abzuspeichern und/oder gespeicherte Daten abzurufen. Auf der Speichereinrichtung 36 gespeicherte Daten können ferner bearbeitet und/oder gelöscht werden.

Bei dem Ausführungsbeispiel ist ferner vorgesehen, dass über die Kommunikationsschnittstelle 38 zumindest zeitweise eine datentechnische Verbindung 52 zu einer externen Einheit 50 herstellbar ist. Diese Verbindung kann auf verschiedene, an sich bekannte Weisen hergestellt werden, etwa mittels Bluetooth, Nahfeldkommunikation/RFID, G5 oder ein anderes Mobilfunknetz, WLAN oder über einen anderen Standard, insbesondere über eine Funksignalübertragung.

Bei weiteren Ausführungsbeispielen kann eine kabelgebundene datentechnische Verbindung 52 zwischen der Kommunikationsschnittstelle 38 und der externen Einheit 50 hergestellt werden. Insbesondere kann auch vorgesehen sein, dass die datentechnische Verbindung 52 mittels zumindest einer der Leitungen 42, 44, 46, die an die ausgangsseitigen Kontakte 20, 22, 24 angeschlossen sind, herstellbar ist; insbesondere kann dabei ein Signal zur Übertragung von Daten einem Stromfluss zur Leistungsübertragung überlagert werden.

Bei dem Ausführungsbeispiel ist ferner vorgesehen, dass die Lokalisierungseinrichtung 37 dazu geeignet ist, Informationen über die Lokalisierung des Steckverbinders 10 zu erfassen. Dies kann auf verschiedene Weisen erfolgen, etwa mittels GPS, 5G oder mittels eines anderen Verfahrens. Die erfassten Informationen über die Lokalisierung des Steckverbinders 10 können eine absolute Position innerhalb eines beispielsweise globalen Koordinatensystems betreffen oder sie können eine relative Position relativ zu einer Ausgangsposition betreffen, etwa relativ zu einer zentralen Steuereinheit.

Bei einem weiteren Ausführungsbeispiel umfasst der Steckverbinder 10 ferner eine Ausgabeeinheit (nicht dargestellt). Diese kann beispielsweise als Anzeigeeinheit ausgebildet sein und etwa ein Display und/oder ein Leuchtelement umfassen. Zum Beispiel kann eine Leuchtdiode (LED) umfasst sein, deren Beleuchtungszustand durch die Steuereinrichtung 34 steuerbar ist. Insbesondere kann ein Lichtparameter gesteuert werden, etwa eine Helligkeit, eine Lichtfarbe oder eine Blinkfrequenz.

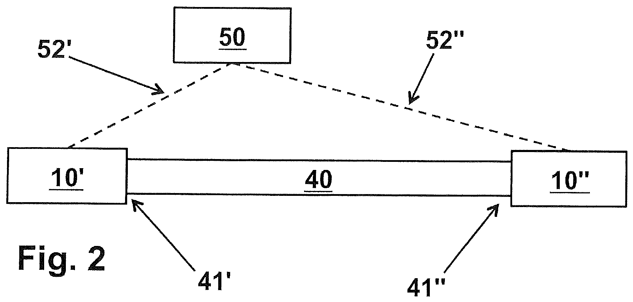

Mit Bezug zu **Figur 2** wird ein Ausführungsbeispiel des Systems erläutert. Dabei wird insbesondere von dem oben erläuterten Ausführungsbeispiel des elektrischen Steckverbinders ausgegangen.

Bei diesem Ausführungsbeispiel ist vorgesehen, dass das Kabel 40 an einem ersten Ende 41' mit einem ersten Steckverbinder 10' verbunden ist und an einem zweiten Ende 41" mit einem zweiten Steckverbinder 10". Die jeweiligen Steckverbinder 10', 10" und ihre Verbindungen zum Kabel 40 sind im Wesentlichen so ausgebildet wie oben mit Bezug zu Figur 1 beschrieben. Von den beiden Steckverbindern 10', 10" sind ferner datentechnische Verbindungen 51', 52" zur externen Einheit 50 herstellbar.

Mit Bezug zu **Figur 1** und **Figur 2** wird ein Ausführungsbeispiel des Verfahrens erläutert. Dabei wird insbesondere von den obenstehenden Erläuterungen mit Bezug zu **Figur 1** und **Figur 2** ausgegangen.

Bei dem Ausführungsbeispiel des Verfahrens wird bei einer Benutzung des Kabels 40 zum Übertragen von elektrischer Leistung und/oder von Daten mittels der Sensoreinrichtung 32 ein elektrischer Betriebsparameter erfasst.

Bei dem Ausführungsbeispiel umfasst der erfasste Betriebsparameter eine Spannung, eine Stromstärke, einen Widerstand, eine Impedanz, eine Induktivität, eine Kapazität, eine Temperatur und/oder einen Luftfeuchtigkeitswert.

Der erfasste elektrische Betriebsparameter umfasst bei dem Ausführungsbeispiel eine Spannung und eine Stromstärke, die über das Kabel 40 übertragen werden beziehungsweise die zweiten zwei Leitungen 42, 44, 46 des Kabels 40 gemessen werden.

Die Steuereinrichtung 34 erzeugt bei dem Ausführungsbeispiel anhand des erfassten Betriebsparameters Ausgabedaten. Diese Ausgangsdaten werden dann mittels der Kommunikationsschnittstelle 38 ausgegeben, wobei sie bei diesem Ausführungsbeispiel an die externe Einheit 50 übertragen werden.

Dabei ist bei dem Ausführungsbeispiel vorgesehen, dass mittels dieser Ausgabedaten ein sogenanntes *"Condition Monitoring"* durchgeführt wird, das heißt eine Überwachung des Zustands des Kabels 40, seiner Leitungen 42, 44, 46, der Steckverbinder 10, 10', 10" und/oder des gesamten Systems. Die Ausgabedaten werden daher so erzeugt, dass fortlaufend für die Übertragung von Leistung und/oder Daten relevante Parameter des Systems und/oder seiner einzelnen Elemente überwacht werden können.

Bei dem Beispiel wird insbesondere überwacht, ob ein erfasster Betriebsparameter einen vorgegebenen Grenzwert über- oder unterschreitet. Wird ein solches Ereignis erfasst, beispielsweise ein unerwarteter Spannungsabfall, so wird ein Alarmsignal ausgegeben und an die externe Einheit 50 übertragen. Diese kann dann ein Steuersignal erzeugen, mittels dessen eine Schutzmaßnahme eingeleitet wird, etwa eine Abschaltung einer Einheit, die durch das Auftreten des Spannungsabfalls beschädigt werden könnte.

Es können verschiedene Ereignisse definiert sein, bei denen ein Alarm- oder Warnsignal ausgelöst wird und es können verschiedene Maßnahmen ausgelöst werden.

Zum Beispiel kann eine graduelle oder plötzliche Veränderung der Leitungseigenschaften erfasst werden, etwa bei einer Beschädigung des Kabels 40, beim Auftreten bestimmter äußerer Umstände, wie etwa einer bestimmten Temperatur, oder bei einer alterungsbedingten Veränderung.

Bei dem Ausführungsbeispiel ist die Steuereinrichtung 34 dazu eingerichtet, anhand des erfassten Betriebsparameters Speicherdaten zu erzeugen und diese mittels der Speichereinrichtung 36 zu speichern. Die Speicherdaten sind hier so ausgebildet, dass der erfasste Betriebsparameter über einen bestimmten Zeitraum hinweg hinterlegt wird und abgerufen werden kann. Dies erlaubt es, die zeitliche Entwicklung des Betriebsparameters nachzuvollziehen und auszuwerten, etwa um zu bestimmen, wie schnell sich der Betriebsparameter verändert und/oder wann/wie oft bestimmte Ereignisse auftreten, etwa Abweichungen von einem Schwellenwert.

Bei dem Ausführungsbeispiel speichert die Speichereinrichtung 36 erfasste Betriebsparameter und/oder Ausgabedaten. Dabei sind von der Speichereinrichtung 36 gespeicherte Daten über die Kommunikationsschnittstelle 38 auslesbar.

Bei dem Ausführungsbeispiel werden die Ausgabedaten ferner automatisch, beispielsweise in regelmäßigen Intervallen oder nach dem Auftreten bestimmter Ereignisse, und/oder auf ein Empfangen eines Anfragesignals hin ausgegeben, insbesondere durch Übertragen an die externe Einheit 50. Ein solches Anfragesignal wird bei dem Ausführungsbeispiel insbesondere von der externen Einheit 50 erzeugt und über die datentechnische Verbindung an den Steckverbinder 10 übertragen.

Bei dem Ausführungsbeispiel sind die Ausgabedaten mittels der Kommunikationsschnittstelle 38 drahtlos ausgebbar. Alternativ oder zusätzlich kann bei weiteren Ausführungsbeispielen eine drahtgebundene Ausgabe erfolgen, beispielsweise über eine Leitung 42, 44, 46 des angeschlossenen Kabels 40.

Bei dem Ausführungsbeispiel weist ferner das Kabel 40 einen Kabel-Parameter auf und dieser ist bei der Speichereinrichtung 36 gespeichert. Beispielsweise kann eine Länge, ein elektrischer Widerstand, ein maximaler Wert für Stromstärke, Spannung und/oder Leistung, eine Induktivität, eine Kapazität, ein thermischer Wert, eine Materialeigenschaft und/oder eine Typenbezeichnung für das Kabel 40 und/oder einzelne Leitungen 42, 44, 46 auf der Speichereinrichtung 36 gespeichert sein.

Dies erleichtert es, anhand des erfassten Betriebsparameters weitere Werte zu bestimmen, etwa eine Erwärmung des Kabels 40, und es kann sichergestellt werden, dass bestimmte spezifische Grenzwerte nicht über- oder unterschritten werden.

Die Kabel-Parameter können beispielsweise durch Messung bei der Herstellung des Kabels und/oder des Steckverbinders bestimmt werden. Ferner kann ein Kalibrierungsschritt vorgesehen sein, bei dem die Kabel-Parameter auf der Speichereinrichtung 36 gespeichert werden.

Bei dem vorliegenden Ausführungsbeispiel ist vorgesehen, dass die Kabel-Parameter im Wesentlichen für den Nutzer unveränderlich auf der Speichereinrichtung 36 hinterlegt sind.

Bei weiteren Ausführungsbeispielen ist vorgesehen, dass die Kabel-Parameter zumindest teilweise nachträglich geändert werden können, wobei beispielsweise die Steuereinrichtung 34 eine Bedienschnittstelle bereitstellt, auf die über die datentechnische Verbindung 52', 52" zugegriffen werden kann und die eine entsprechende Eingabe erlaubt. Dabei kann ferner ein Authentifizierungsschritt vorgesehen sein, um eine Berechtigung des Nutzers zu einem entsprechenden Schreib-Zugriff auf die Speichereinrichtung 36 sicherzustellen.

Bei dem Ausführungsbeispiel umfassen die Ausgabedaten Lokalisierungsinformationen, die mittels der Lokalisierungseinheit 37 erfasst wurden. Die Lokalisierungsinformationen sind bei dem Beispiel so gebildet, dass bei Ausgabe eines Alarm- oder Warnsignals, bei einem Ausfall des Kabels 40 oder bei anderen Anlässen das Kabel 40 und/oder der Steckverbinder 10, 10', 10" einfach lokalisiert werden kann, etwa um Reparaturen vornehmen zu können.

### Bezugszeichenliste

- 10, 10', 10": Steckverbinder
- 12: Gehäuse
- 14: eingangsseitiger Kontakt
- 16: eingangsseitiger Kontakt
- 18: eingangsseitiger Kontakt
- 20: ausgangsseitiger Kontakt
- 22: ausgangsseitiger Kontakt
- 24: ausgangsseitiger Kontakt
- 30: Schaltung
- 32: Sensoreinrichtung
- 34: Steuereinrichtung
- 36: Speichereinrichtung
- 37: Lokalisierungseinrichtung
- 38: Kommunikationsschnittstelle
- 40: Kabel
- 41', 41": Kabelende
- 42: Leitung
- 44: Leitung
- 46: Leitung
- 50: externe Einheit
- 52, 52', 52": datentechnische Verbindung

## Patentansprüche

1. System, bestehend aus einem elektrischen Steckverbinder (10) und einem Kabel (40) mit einem ersten Kabelende (41') und einem zweiten Kabelende (41"),
wobei das erste (41') oder zweite Kabelende (41") mit einem ausgangsseitigen Kontakt (20, 22, 24) des elektrischen Steckverbinders (10) verbunden ist,
wobei der elektrische Steckverbinder (10) umfasst:
ein Gehäuse (12);
zumindest einen eingangsseitigen Kontakt (14, 16, 18);
zumindest einen ausgangsseitigen Kontakt (20, 22, 24); und
eine elektrische Schaltung (30), die innerhalb des Gehäuses (12) angeordnet ist; wobei
die elektrische Schaltung (30) eine Sensoreinrichtung (32), eine Steuereinrichtung (34), eine Speichereinrichtung (36) und eine Kommunikationsschnittstelle (38) aufweist; wobei
die Sensoreinrichtung (32) dazu eingerichtet ist, einen elektrischen Betriebsparameter zu erfassen; und
die Steuereinrichtung (34) dazu eingerichtet ist, anhand des elektrischen Betriebsparameters Ausgabedaten zu erzeugen und mittels einer Kommunikationsschnittstelle (38) auszugeben;
**dadurch gekennzeichnet**
**dass** in der Speichereinrichtung (36) ein Wert eines Kabel-Parameters des Kabels (40) gespeichert ist,
und **dass** die Steuereinrichtung (34) und die Kommunikationsschnittstelle (38) dazu eingerichtet sind, eine Bedienoberfläche bereitzustellen, um anhand einer Nutzereingabe und/oder anhand eines von einer externen Einheit empfangenen Signals weitere Kabel-Parameter und/oder Informationen über Einbaubedingungen auf der Speichereinrichtung (36) zu hinterlegen.

2. System gemäß Anspruch 1,
**dadurch gekennzeichnet, dass**
auf der Speichereinrichtung (36) Kennwerte zur Entwicklung des Leitungswiderstands des Kabels in Abhängigkeit von der Temperatur gespeichert sind, und/oder Daten einer Kennlinie gespeichert sind, mittels derer anhand einer erfassten Temperatur eine Belastbarkeit des Kabels bestimmbar ist, insbesondere ein maximal zulässiger Wert einer Leistung, Spannung und/oder Stromstärke,
wobei insbesondere Parameter betreffend eine Strombelastbarkeit des angeschlossenen Kabels (40) in der Speichereinrichtung (36) gespeichert sind, insbesondere in Abhängigkeit von der Temperatur.

3. System gemäß einem der vorhergehenden Ansprüche,
**dadurch gekennzeichnet, dass**
auf der Speichereinrichtung (36) Kabel-Parameter gespeichert sind, die das Bestimmen eines weiteren Kabel-Parameters erlauben.

4. System gemäß einem der vorhergehenden Ansprüche,
**dadurch gekennzeichnet, dass**
die elektrische Schaltung (30) ferner eine Lokalisierungseinheit (37) aufweist; wobei
insbesondere die Ausgabedaten eine mittels der Lokalisierungseinheit (37) erfasste Lokalisierungsinformation umfassen, die insbesondere dazu geeignet ist, eine Anordnung des Steckverbinders zu bestimmen, insbesondere relativ zu einem Ausgangspunkt, beispielsweise relativ zu den Positionen von Sendestationen in einem engmaschigen lokalen 5G-Netz, und/oder insbesondere relativ zu einer oder mehreren Referenzpositionen, vorzugsweise als beschreibend gebildete Lokalisierungsinformationen.

5. System gemäß einem der vorhergehenden Ansprüche,
**dadurch gekennzeichnet, dass**
Produktionsparameter und/oder Identifikationsdaten über das an den Steckverbinder (10) angeschlossene Kabel (40) in der Speichereinrichtung (36) gespeichert sind, insbesondere eine Typenbezeichnung und/oder ein elektrischer Widerstand des Kabels (40), wobei dieser Widerstand insbesondere werkseitig bei der Herstellung gemessen worden ist, und/oder Kalibrierungsdaten, die bei der Herstellung des Systems in einem Kalibrierungsschritt ermittelt worden sind, und/oder Kabel-Parameter, die durch im Fertigungsprozess integrierte, einfache Messmethoden oder nach einer einmaligen Messung bereitgestellt worden sind.

6. System gemäß einem der vorhergehenden Ansprüche,
**dadurch gekennzeichnet, dass**
die Sensoreinrichtung (32) dazu eingerichtet ist, als elektrischen Betriebsparameter einen Isolationswiderstand zwischen an den Steckverbinder (10) angeschlossenen Leitern zu erfassen und/oder als elektrischen Betriebsparameter einen Leitungswiderstand zwischen den Enden (41', 41") des Kabels (40) zu ermitteln. und dass die Speichereinrichtung einen Isolationswiderstand zwischen einzelnen Leitern des Kabels (40) speichert, wobei dieser Isolationswiderstand insbesondere werksseitig bei der Herstellung und/oder zu einem späteren Zeitpunkt gemessen und auf der Speichereinrichtung hinterlegt worden ist.

7. System gemäß einem der vorhergehenden Ansprüche,
**dadurch gekennzeichnet, dass**
auf der Speichereinrichtung (36) Daten betreffend eine Wärmeableitfähigkeit einer Kabelisolierung des an den Steckverbinder (10) angeschlossenen Kabels (40) gespeichert sind, wobei insbesondere auch Daten über eine Abhängigkeit dieser Wärmeableitfähigkeit von bestimmten Einbaubedingungen gespeichert sind, insbesondere dass
weitere Informationen auf der Speichereinrichtung (36) gespeichert sind, die Einbaubedingungen betreffen, welche die Wärmeableitfähigkeit beeinflussen können, und/oder die eine Umgebungstemperatur betreffen, und/oder die Parameter der elektromagnetischen Verträglichkeit betreffen, insbesondere im Zusammenhang mit Merkmalen einer Abschirmung, und/oder die Identifikationsdaten für den Steckverbinder (10) und/oder das angeschlossene Kabel (40) betreffen, insbesondere eine Modell- oder Typenbezeichnung, Seriennummer und/oder Artikelnummer.

8. System gemäß einem der vorhergehenden Ansprüche,
**dadurch gekennzeichnet, dass**
auf der Speichereinrichtung (36) ein Schwellenwert gespeichert ist, um erfasste Betriebsparameter mit dem Schwellenwert zu vergleichen und bei Überbeziehungsweise Unterschreiten des Schwellenwerts einen Alarm auszugeben, insbesondere um zu erkennen, wenn eine erfasste Stromstärke plötzlich sinkt oder sich Spannungsabfälle auf einer angeschlossenen Leitung ereignen, und/oder um einen erfassten Leitungswiderstand auszuwerten, insbesondere um Veränderungen der Eigenschaften des Kabels (40) zu erkennen, die durch fortschreitende Alterung, durch mechanische Beschädigungen und/oder durch Erwärmung oder Abkühlung des Kabels, etwa bei Kontakt mit einer Flüssigkeit wie Regen, bedingt sind, oder um gebrochene Leitungen und/oder kurzfristige Unterbrechungen der Leitfähigkeit des Kabels (40), etwa bei einem Wackelkontakt, zu erkennen.

9. System gemäß einem der vorhergehenden Ansprüche,
**dadurch gekennzeichnet, dass**
der zumindest eine eingangsseitige Kontakt (14, 16, 18) und/oder der zumindest eine ausgangsseitige Kontakt (20, 22, 24) dazu eingerichtet sind, kontinuierlich Spannungen und/oder Stromstärken daran zu messen, um die erfassten Werte zum Zweck einer fortlaufenden Zustandsüberwachung einer elektrischen Verbindung und/oder Datenverbindung, zum Zweck der Erfassung einer sich verschlechternden Kabelqualität, zum Zweck der Planung von Wartungsintervallen und/oder zum Zweck einer Lokalisierung von Fehlerquellen, insbesondere einem schleichenden Kabelfehler oder einem Kabelausfall, zu kommunizieren und/oder zur späteren Ausgabe zu speichern.

10. System gemäß einem der vorhergehenden Ansprüche,
**dadurch gekennzeichnet, dass**
mehrere elektrische Steckverbinder (10) vorhanden sind, die direkt oder vermittelt durch eine externe Steuereinheit (50) oder vermittelt durch ein Element, das von einer externen Steuereinheit (50) umfasst ist, miteinander kommunizieren.

11. Verfahren zum Betreiben eines Systems nach mindestens einem der Ansprüche 1 bis 10, wobei der Steckverbinder (10) eine Sensoreinrichtung (32) zum Erfassen eines elektrischen Betriebsparameters umfasst, wobei bei dem Verfahren
ein Vergleich zwischen dem erfassten Betriebsparameter und einem Schwellenwert ausgeführt wird; und
in Abhängigkeit von dem Ergebnis des Vergleichs Ausgabedaten erzeugt und ausgegeben werden, und wobei
anhand einer Nutzereingabe und/oder anhand eines von einer externen Einheit empfangenen Signals weitere Kabel-Parameter und/oder Informationen über Einbaubedingungen mittels der Bedienoberfläche auf der Speichereinrichtung (36) hinterlegt werden.

12. Verfahren nach Anspruch 11,
wobei durch den Steckverbinder (10) eine Benachrichtigung ausgegeben wird, wenn das Betreiben eines bestimmten angeschlossenen Geräts zu einer Überlastung der an den Steckverbinder angeschlossenen Leitung führen würde, wobei das Gerät dann abgeschaltet werden kann, insbesondere automatisch durch eine integrierte oder externe Steuereinrichtung, oder das Gerät seine Stromaufnahme auf ein Minimum reduziert,
und/oder eine Benachrichtigung über die Belastbarkeit des Kabels an ein Netzteil übertragen wird, woraufhin das Netzteil eine ausgegebene Stromstärke reduziert oder zur Sicherheit eine Abschaltung ausführt oder einen Alarm und/oder die Ausgabe einer Alarmbenachrichtigung auslöst.

13. Verfahren nach einem der Ansprüche 11 oder 12,
wobei eine elektrische Schaltung (30) mit einer Lokalisierungseinheit (37) verwendet wird, und wobei insbesondere die Ausgabedaten eine mittels der Lokalisierungseinheit (37) erfasste Lokalisierungsinformation umfassen, die dazu verwendet wird, eine Anordnung des Steckverbinders zu bestimmen, insbesondere relativ zu einem Ausgangspunkt, beispielsweise relativ zu den Positionen von Sendestationen in einem engmaschigen lokalen 5G-Netz, und/oder insbesondere relativ zu einer oder mehreren Referenzpositionen, vorzugsweise als beschreibend gebildete Lokalisierungsinformationen.

14. Verfahren nach Anspruch 13,
wobei anhand der Lokalisierungsinformationen eine Erkennung einer Topologie der Leitungen durchgeführt wird und/oder wobei aus der auf die einzelnen Leitungen bezogenen Topologie eine Topologie eines gesamten Spannungs-Versorgungsnetzwerks bestimmt wird,
wobei insbesondere anhand einer Differenz der gemessenen Stromstärken und/oder Spannungen ermittelt wird, wie viel Leistungsaufnahme an einzelnen Knotenpunkten, insbesondere auch an Verteilerstationen, durch angeschlossene Geräte erfolgt, und wobei der elektrische Steckverbinder (10) insbesondere für ein Verfahren zum Condition Monitoring und/oder zur Überwachung einer Kabelverbindung genutzt wird.

15. Verfahren nach einem der Ansprüche 11 bis 14,
wobei auf der Speichereinrichtung (36) der Schwellenwert gespeichert ist, um erfasste Betriebsparameter mit dem Schwellenwert zu vergleichen und bei Überbeziehungsweise Unterschreiten des Schwellenwerts einen Alarm auszugeben, insbesondere um zu erkennen, wenn eine erfasste Stromstärke plötzlich sinkt oder sich Spannungsabfälle auf einer angeschlossenen Leitung ereignen, und/oder um einen erfassten Leitungswiderstand auszuwerten, insbesondere um Veränderungen der Eigenschaften des Kabels (40) zu erkennen, die durch fortschreitende Alterung, durch mechanische Beschädigungen und/oder durch Erwärmung oder Abkühlung des Kabels, etwa bei Kontakt mit einer Flüssigkeit wie Regen, bedingt sind, oder um gebrochene Leitungen und/oder kurzfristige Unterbrechungen der Leitfähigkeit des Kabels (40), etwa bei einem Wackelkontakt, zu erkennen.

16. Verfahren nach mindestens einem der Ansprüche 11 bis 15,
wobei die Sensoreinrichtung (32) als elektrischen Betriebsparameter einen Isolationswiderstand zwischen an den Steckverbinder (10) angeschlossenen Leitern erfasst und/oder als elektrischen Betriebsparameter einen Leitungswiderstand zwischen den Enden (41', 41") des Kabels (40) ermittelt.

17. Verfahren nach mindestens einem der Ansprüche 11 bis 16,
wobei am zumindest einen eingangsseitigen Kontakt (14, 16, 18) und/oder am zumindest einen ausgangsseitigen Kontakt (20, 22, 24) kontinuierlich Spannungen und/oder Stromstärken gemessen werden, um die erfassten Werte zum Zweck einer fortlaufenden Zustandsüberwachung einer elektrischen Verbindung und/oder Datenverbindung, zum Zweck der Erfassung einer sich verschlechternden Kabelqualität, zum Zweck der Planung von Wartungsintervallen und/oder zum Zweck einer Lokalisierung von Fehlerquellen, insbesondere einem schleichenden Kabelfehler oder einem Kabelausfall, zu kommunizieren und/oder zur späteren Ausgabe zu speichern.

## Claims

1. System consisting of an electrical plug connector (10) and a cable (40) having a first cable end (41') and a second cable end (41"), the first (41') or second (41") cable end being connected to an output contact (20, 22, 24) of the electrical plug connector (10), the electrical plug connector (10) comprising:
a housing (12);
at least one input contact (14, 16, 18);
at least one output contact (20, 22, 24); and
an electrical circuit (30) arranged inside the housing (12);
the electrical circuit (30) having a sensor device (32), a control device (34), a memory device (36) and a communication interface (38);
the sensor device (32) being configured to record an electrical operating parameter; and
the control device (34) being configured to take the electrical operating parameter as a basis for generating output data and to output said output data by means of a communication interface (38);
**characterized**
**in that** the memory device (36) stores a value of a cable parameter of the cable (40),
and **in that** the control device (34) and the communication interface (38) are configured to provide a user interface in order to take a user input and/or a signal received from an external unit as a basis for storing further cable parameters, and/or information about installation conditions, on the memory device (36).

2. System according to Claim 1,
**characterized in that**
the memory device (36) stores characteristic values relating to the variation of the line resistance of the cable as a function of temperature, and/or stores data of a characteristic curve by means of which a recorded temperature can be taken as a basis for determining a loading capacity of the cable, in particular a maximum permissible value of a power, voltage and/or current, parameters relating to a current-carrying capacity of the connected cable (40) in particular being stored in the memory device (36), in particular as a function of temperature.

3. System according to either of the preceding claims, **characterized in that**
the memory device (36) stores cable parameters that permit the determination of a further cable parameter.

4. System according to either of the preceding claims, **characterized in that**
the electrical circuit (30) furthermore has a localization unit (37);
the output data in particular comprising localization information recorded by means of the localization unit (37), which localization information is in particular suitable for determining an arrangement of the plug connector, in particular in relation to a starting point, for example in relation to the positions of transmitting stations in a close-mesh local 5G network, and/or in particular in relation to one or more reference positions, preferably as descriptively formed localization information.

5. System according to either of the preceding claims, **characterized in that**
production parameters and/or identification data about the cable (40) connected to the plug connector (10) are stored in the memory device (36), in particular a type designation and/or an electrical resistance of the cable (40), this resistance having been measured in particular at the factory during production, and/or calibration data that have been determined in a calibration step during production of the system, and/or cable parameters that have been provided using simple measurement methods integrated in the manufacturing process or after a single measurement.

6. System according to either of the preceding claims, **characterized in that**
the sensor device (32) is configured to record an insulation resistance between conductors connected to the plug connector (10) as electrical operating parameters and/or to determine a line resistance between the ends (41', 41") of the cable (40) as electrical operating parameters, and **in that** the memory device stores an insulation resistance between individual conductors of the cable (40), this insulation resistance having been measured in particular at the factory during production and/or at a later time and stored on the memory device.

7. System according to either of the preceding claims, **characterized in that**
the memory device (36) stores data relating to a heat dissipation capability of a cable insulation of the cable (40) connected to the plug connector (10), data about a dependence of this heat dissipation capability on specific installation conditions in particular also being stored, in particular **in that**
the memory device (36) stores further information relating to installation conditions that can influence the heat dissipation capability and/or relating to an ambient temperature and/or relating to parameters of electromagnetic compatibility, in particular in connection with features of a screen, and/or relating to identification data for the plug connector (10) and/or the connected cable (40), in particular a model designation or type designation, serial number and/or item number.

8. System according to either of the preceding claims, **characterized in that**
the memory device (36) stores a threshold value in order to compare recorded operating parameters with the threshold value and to output an alarm when the threshold value is exceeded or undershot, in particular in order to identify when a recorded current suddenly falls or voltage drops on a connected line occur, and/or in order to evaluate a recorded line resistance, in particular in order to identify changes in the properties of the cable (40) that are caused by progressive aging, by mechanical damage and/or by heating or cooling of the cable, for instance on contact with a liquid such as rain, or in order to identify broken lines and/or brief interruptions in the conductivity of the cable (40), for instance in the case of a loose contact.

9. System according to either of the preceding claims, **characterized in that**
the at least one input contact (14, 16, 18) and/or the at least one output contact (20, 22, 24) are configured to continuously measure voltages and/or currents thereon in order to communicate, and/or store for later output, the recorded values for the purpose of continuous state monitoring for an electrical connection and/or data connection, for the purpose of detecting a deteriorating cable quality, for the purpose of planning maintenance intervals and/or for the purpose of localizing fault sources, in particular a slowly developing cable fault or a cable failure.

10. System according to either of the preceding claims, **characterized in that**
there are multiple electrical plug connectors (10) that communicate with one another directly or through an external control unit (50) or through an element that an external control unit (50) comprises.

11. Method for operating a system according to at least one of Claims 1 to 10, the plug connector (10) comprising
a sensor device (32) for recording an electrical operating parameter, wherein the method involves
a comparison between the recorded operating parameter and a threshold value being performed; and
the result of the comparison being taken as a basis for output data being generated and output, and wherein
a user input and/or a signal received from an external unit are taken as a basis for storing further cable parameters, and/or information about installation conditions, on the memory device (36) by means of the user interface.

12. Method according to Claim 11,
wherein the plug connector (10) outputs a notification if the operation of a specific connected device would lead to overloading of the line connected to the plug connector, the device then being able to be shut down, in particular automatically by an integrated or external control device, or the device reducing its current draw to a minimum,
and/or a notification of the loading capacity of the cable is transmitted to a power supply unit, the power supply unit then reducing an output current or, for safety purposes, performing a shutdown or triggering an alarm and/or the output of an alarm notification.

13. Method according to either of Claims 11 and 12,
wherein an electrical circuit (30) comprising a localization unit (37) is used, and wherein the output data in particular comprise localization information recorded by means of the localization unit (37), which localization information is used to determine an arrangement of the plug connector, in particular in relation to a starting point, for example in relation to the positions of transmitting stations in a close-mesh local 5G network, and/or in particular in relation to one or more reference positions, preferably as descriptively formed localization information.

14. Method according to Claim 13,
wherein the localization information is taken as a basis for identifying a topology of the lines and/or wherein the topology related to the individual lines is used to determine a topology of an entire power supply network, wherein a difference in the measured currents and/or voltages is in particular taken as a basis for determining how much power is drawn at individual nodes, in particular also at distribution stations, by connected devices, and wherein the electrical plug connector (10) is used in particular for a method for condition monitoring and/or for monitoring a cable connection.

15. Method according to one of Claims 11 to 14,
wherein the memory device (36) stores the threshold value in order to compare recorded operating parameters with the threshold value and to output an alarm when the threshold value is exceeded or undershot, in particular in order to identify when a recorded current suddenly falls or voltage drops on a connected line occur, and/or in order to evaluate a recorded line resistance, in particular in order to identify changes in the properties of the cable (40) that are caused by progressive aging, by mechanical damage and/or by heating or cooling of the cable, for instance on contact with a liquid such as rain, or in order to identify broken lines and/or brief interruptions in the conductivity of the cable (40), for instance in the case of a loose contact.

16. Method according to at least one of Claims 11 to 15, wherein the sensor device (32) records an insulation resistance between conductors connected to the plug connector (10) as electrical operating parameters and/or determines a line resistance between the ends (41', 41") of the cable (40) as electrical operating parameters.

17. Method according to at least one of Claims 11 to 16, wherein the at least one input contact (14, 16, 18) and/or the at least one output contact (20, 22, 24) continuously measure voltages and/or currents thereon in order to communicate, and/or store for later output, the recorded values for the purpose of continuous state monitoring for an electrical connection and/or data connection, for the purpose of detecting a deteriorating cable quality, for the purpose of planning maintenance intervals and/or for the purpose of localizing fault sources, in particular a slowly developing cable fault or a cable failure.

## Revendications

1. Système constitué d'un connecteur enfichable (10) électrique et d'un câble (40) ayant une première extrémité de câble (41') et une deuxième extrémité de câble (41"), la première (41') ou la deuxième extrémité de câble (41") étant connectée à un contact côté sortie (20, 22, 24) du connecteur enfichable (10) électrique, le connecteur enfichable (10) électrique comprenant :
un boîtier (12) ;
au moins un contact côté entrée (14, 16, 18) ;
au moins un contact côté sortie (20, 22, 24) ; et
un circuit électrique (30) qui est disposé à l'intérieur du boîtier (12) ;
le circuit électrique (30) possédant un dispositif capteur (32), un dispositif de commande (34), un dispositif de mémoire (36) et une interface de communication (38) ;
le dispositif capteur (32) étant conçu pour détecter un paramètre de fonctionnement électrique ; et
le dispositif de commande (34) étant conçu pour générer des données de sortie à l'aide du paramètre de fonctionnement électrique et les délivrer au moyen d'une interface de communication (38) ;
**caractérisé en ce**
**qu'**une valeur d'un paramètre de câble du câble (40) est mémorisée dans le dispositif de mémoire (36),
et **que** le dispositif de commande (34) et l'interface de communication (38) sont conçus pour fournir une interface opérateur afin de stocker, sur le dispositif de mémoire (36), des paramètres de câble et/ou des informations supplémentaires à propos des conditions d'installation à l'aide d'une saisie d'utilisateur et/ou à l'aide d'un signal reçu d'une unité externe.

2. Système selon la revendication 1,
**caractérisé en ce que**
sur le dispositif de mémoire (36) sont mémorisées des valeurs caractéristiques relatives à l'évolution de la résistance de ligne du câble en fonction de la température, et/ou sont mémorisées des données d'une courbe caractéristique, au moyen desquelles une capacité de charge du câble peut être déterminée à l'aide d'une température détectée, en particulier une valeur maximale admissible d'une puissance, d'une tension et/ou d'une intensité de courant, des paramètres concernant une capacité de charge du câble (40) raccordé étant notamment mémorisés dans le dispositif de mémoire (36), en particulier en fonction de la température.

3. Système selon l'une des revendications précédentes, **caractérisé en ce que**
des paramètres de câble qui permettent de déterminer un paramètre de câble supplémentaire sont mémorisés sur le dispositif de mémoire (36).

4. Système selon l'une des revendications précédentes, **caractérisé en ce que**
le circuit électrique (30) possède en outre une unité de localisation (37) ;
les données de sortie comprenant notamment des informations de localisation acquises au moyen de l'unité de localisation (37), lesquelles sont notamment adaptées pour déterminer une disposition du connecteur enfichable, en particulier par rapport à un point de départ, par exemple par rapport aux positions de stations émettrices dans un réseau local 5G à mailles étroites, et/ou en particulier par rapport à une ou plusieurs positions de référence, de préférence sous la forme d'informations de localisation formées de manière descriptive.

5. Système selon l'une des revendications précédentes, **caractérisé en ce que**
des paramètres de production et/ou des données d'identification concernant le câble (40) raccordé au connecteur enfichable (10) sont mémorisés dans le dispositif de mémoire (36), en particulier une désignation de type et/ou une résistance électrique du câble (40), cette résistance ayant en particulier été mesurée en usine lors de la fabrication, et/ou des données d'étalonnage qui ont été déterminées lors de la fabrication du système dans une étape d'étalonnage, et/ou des paramètres de câble qui ont été fournis par des méthodes de mesure simples intégrées dans le processus de fabrication ou après une mesure unique.

6. Système selon l'une des revendications précédentes, **caractérisé en ce que**
le dispositif capteur (32) est conçu pour détecter, en tant que paramètre de fonctionnement électrique, une résistance d'isolement entre des conducteurs raccordés au connecteur enfichable (10) et/ou pour déterminer, en tant que paramètre de fonctionnement électrique, une résistance de ligne entre les extrémités (41', 41") du câble (40), et **en ce que** le dispositif de mémoire mémorise une résistance d'isolement entre les conducteurs individuels du câble (40), cette résistance d'isolement ayant notamment été mesurée en usine lors de la fabrication et/ou à un moment ultérieur et ayant été stockée sur le dispositif de mémoire.

7. Système selon l'une des revendications précédentes, **caractérisé en ce que**
des données concernant une capacité de dissipation thermique d'une isolation de câble du câble (40) raccordé au connecteur enfichable (10) sont mémorisées sur le dispositif de mémoire (36), des données relatives à une dépendance de cette capacité de dissipation thermique à des conditions d'installation déterminées étant notamment également mémorisées, en particulier **en ce que** des informations supplémentaires sont mémorisées sur le dispositif de mémoire (36), lesquelles concernent les conditions d'installation qui sont susceptibles d'influencer la capacité de dissipation thermique, et/ou qui concernent une température ambiante, et/ou qui concernent des paramètres de la compatibilité électromagnétique, en particulier en relation avec des caractéristiques d'un blindage, et/ou qui concernent les données d'identification du connecteur enfichable (10) et/ou du câble (40) raccordé, notamment une désignation de modèle ou de type, un numéro de série et/ou un numéro d'article.

8. Système selon l'une des revendications précédentes, **caractérisé en ce que**
une valeur de seuil est mémorisée sur le dispositif de mémoire (36) afin de comparer les paramètres de fonctionnement détectés avec la valeur de seuil et délivrer une alarme en cas de franchissement dans un sens ou dans l'autre de la valeur de seuil, en particulier en vue de reconnaître lorsqu'une intensité de courant détectée chute brusquement ou des chutes de tension qui surviennent sur une ligne connectée, et/ou en vue d'évaluer une résistance de ligne détectée, en particulier pour reconnaître des modifications des propriétés du câble (40) qui sont provoquées par le vieillissement progressif, par des dommages mécaniques et/ou par l'échauffement ou le refroidissement du câble, par exemple en cas de contact avec un liquide tel que la pluie, ou en vue de détecter des lignes interrompues et/ou des interruptions de courte durée de la conductivité du câble (40), par exemple dans le cas d'un mauvais contact.

9. Système selon l'une des revendications précédentes, **caractérisé en ce que**
l'au moins un contact côté entrée (14, 16, 18) et/ou l'au moins un contact côté sortie (20, 22, 24) sont conçus pour mesurer continuellement des tensions et/ou des intensités de courant sur ceux-ci afin de communiquer les valeurs acquises à des fins de surveillance continue de l'état d'une connexion électrique et/ou d'une connexion de données, à des fins de détection d'une détérioration de la qualité du câble, à des fins de planification des intervalles de maintenance et/ou à des fins de localisation de sources de défaut, en particulier un défaut de câble ou une panne de câble intempestif, et/ou les mémoriser pour une délivrance ultérieure.

10. Système selon l'une des revendications précédentes, **caractérisé en ce que**
plusieurs connecteurs enfichables (10) électriques sont présents, lesquels communiquent entre eux directement ou par l'intermédiaire d'une unité de commande externe (50) ou par l'intermédiaire d'un élément qui est constitué d'une unité de commande externe (50).

11. Procédé pour faire fonctionner un système selon au moins l'une des revendications 1 à 10, le connecteur enfichable (10) comprenant un dispositif capteur (32) destiné à détecter un paramètre de fonctionnement électrique, lors du procédé
une comparaison étant effectuée entre le paramètre de fonctionnement détecté et une valeur de seuil ; et
des données de sortie étant générées et délivrées en fonction du résultat de la comparaison, et
des paramètres de câble et/ou des informations supplémentaires à propos des conditions d'installation, reçus à l'aide d'une saisie d'utilisateur et/ou à l'aide d'une unité externe, étant stockés sur le dispositif de mémoire (36) au moyen de l'interface utilisateur.

12. Procédé selon la revendication 11,
une notification étant émise par le biais du connecteur enfichable (10) lorsque le fonctionnement d'un appareil connecté déterminé entraînerait une surcharge de la ligne connectée au connecteur enfichable, l'appareil pouvant alors être mis hors circuit, en particulier automatiquement par le biais d'un dispositif de commande intégré ou externe, ou l'appareil réduisant sa consommation de courant au minimum,
et/ou une notification à propos de la capacité de charge du câble étant transmise à un bloc d'alimentation secteur, après quoi le bloc d'alimentation secteur réduit une intensité de courant délivrée ou, pour des raisons de sécurité, effectue une mise hors circuit ou déclenche une alarme et/ou la délivrance d'une notification d'alarme.

13. Procédé selon l'une des revendications 11 et 12, un circuit électrique (30) comprenant une unité de localisation (37) étant utilisé, et les données de sortie comprenant en particulier des informations de localisation acquises au moyen de l'unité de localisation (37), lesquelles sont utilisées pour déterminer une disposition du connecteur enfichable, en particulier par rapport à un point de départ, par exemple par rapport aux positions des stations émettrices dans un réseau local 5G à mailles étroites, et/ou en particulier par rapport à une ou plusieurs positions de référence, de préférence sous la forme d'informations de localisation formées de manière descriptive.

14. Procédé selon la revendication 13,
une reconnaissance d'une topologie des lignes étant effectuée à l'aide des informations de localisation et/ou une topologie d'un réseau d'alimentation électrique entier étant déterminée à partir de la topologie relative aux lignes individuelles,
la puissance consommée au niveau de points nodaux individuels, en particulier également au niveau des stations de distribution, par des appareils connectés étant déterminée, en particulier à l'aide d'une différence entre les intensités de courant et/ou les tensions mesurées, et le connecteur enfichable (10) électrique étant utilisé notamment pour un procédé de surveillance d'état et/ou de surveillance d'une connexion par câble.

15. Procédé selon l'une des revendications 11 à 14,
la valeur de seuil étant mémorisée sur le dispositif de mémoire (36) afin de comparer les paramètres de fonctionnement détectés avec la valeur de seuil et délivrer une alarme en cas de franchissement dans un sens ou dans l'autre de la valeur de seuil, en particulier en vue de reconnaître lorsqu'une intensité de courant détectée chute brusquement ou des chutes de tension qui surviennent sur une ligne connectée, et/ou en vue d'évaluer une résistance de ligne détectée, en particulier pour reconnaître des modifications des propriétés du câble (40) qui sont provoquées par le vieillissement progressif, par des dommages mécaniques et/ou par l'échauffement ou le refroidissement du câble, par exemple en cas de contact avec un liquide tel que la pluie, ou en vue de détecter des lignes interrompues et/ou des interruptions de courte durée de la conductivité du câble (40), par exemple dans le cas d'un mauvais contact.

16. Procédé selon l'une des revendications 11 à 15,
le dispositif de détection (32) détectant, en tant que paramètres de fonctionnement électrique, une résistance d'isolement entre des conducteurs raccordés au connecteur enfichable (10) et/ou déterminant, en tant que paramètres de fonctionnement électrique, une résistance de ligne entre les extrémités (41', 41") du câble (40).

17. Procédé selon l'une des revendications 11 à 16,
des tensions et/ou des intensités de courant étant mesurées en continu au niveau d'au moins un contact côté entrée (14, 16, 18) et/ou d'au moins un contact côté sortie (20, 22, 24) afin de communiquer les valeurs acquises à des fins de surveillance continue de l'état d'une connexion électrique et/ou d'une connexion de données, à des fins de détection d'une détérioration de la qualité du câble, à des fins de planification des intervalles de maintenance et/ou à des fins de localisation de sources de défaut, en particulier un défaut de câble ou une panne de câble intempestif, et/ou les mémoriser pour une délivrance ultérieure.
